(19) Europäisches Patentamt / European Patent Office / Office européen des brevets

(11) **EP 2 732 873 B1**

(12) **EUROPEAN PATENT SPECIFICATION**

(45) Date of publication and mention
of the grant of the patent:
**06.12.2017   Bulletin 2017/49**

(51) Int Cl.:
***H01M 4/90*** *(2006.01)*       *H01M 8/1018* *(2016.01)*
***H01M 4/86*** *(2006.01)*

(21) Application number: **12810882.6**

(22) Date of filing: **13.04.2012**

(86) International application number:
**PCT/JP2012/060170**

(87) International publication number:
**WO 2013/008501 (17.01.2013 Gazette 2013/03)**

(54) **OXYGEN REDUCTION CATALYST, PROCESS FOR PRODUCING SAME, AND POLYMER ELECTROLYTE MEMBRANE FUEL CELL**

SAUERSTOFFREDUKTIONSKATALYSATOR, VERFAHREN ZU SEINER HERSTELLUNG UND POLYMERELEKTROLYT-MEMBRAN-BRENNSTOFFZELLE

CATALYSEUR DE RÉDUCTION DE L'OXYGÈNE, SON PROCÉDÉ DE PRODUCTION ET PILE À COMBUSTIBLE À MEMBRANE POLYMÈRE ÉCHANGEUSE DE PROTONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **14.07.2011   JP 2011155853**

(43) Date of publication of application:
**21.05.2014   Bulletin 2014/21**

(60) Divisional application:
**17194888.8**

(73) Proprietor: **Showa Denko K.K.**
**Tokyo 105-8518 (JP)**

(72) Inventors:
• **TAKAHASHI, Akira**
  **Tokyo 105-8518 (JP)**
• **IMAI, Takuya**
  **Tokyo 105-8518 (JP)**
• **MONDEN, Ryuji**
  **Tokyo 105-8518 (JP)**
• **WAKIZAKA, Yasuaki**
  **Tokyo 105-8518 (JP)**
• **SATO, Takashi**
  **Tokyo 105-8518 (JP)**

(74) Representative: **Strehl Schübel-Hopf & Partner**
**Maximilianstrasse 54**
**80538 München (DE)**

(56) References cited:
| | |
|---|---|
| EP-A1- 2 187 469 | EP-A1- 2 251 081 |
| WO-A1-2009/119523 | WO-A1-2009/119523 |
| WO-A1-2010/126020 | WO-A1-2011/007790 |
| WO-A1-2011/049173 | WO-A1-2011/099493 |
| WO-A1-2011/099493 | JP-A- 2007 257 888 |
| JP-A- 2011 194 328 | |

**Description**

TECHNICAL FIELD

The present invention relates to an oxygen reduction catalyst useful as a fuel cell electrode catalyst; a method for producing the oxygen reduction catalyst; and a polymer electrolyte fuel cell produced from the oxygen reduction catalyst.

BACKGROUND ART

A polymer electrolyte fuel cell is a fuel cell in the form in which a polymer solid electrolyte is sandwiched between an anode and a cathode, a fuel is supplied to the anode, and oxygen or air is supplied to the cathode, whereby oxygen is reduced at the cathode to produce electricity. As the fuel, hydrogen, methanol, or the like is mainly used.

To enhance a reaction rate in a fuel cell and to enhance the energy conversion efficiency of the fuel cell, a layer containing a catalyst (hereinafter also referred to as a "fuel cell catalyst layer") has been conventionally disposed on the surface of a cathode (air electrode) or the surface of an anode (fuel electrode) of the fuel cell.

As such a catalyst, noble metals have been generally used, and, among the noble metals, noble metals which are stable at a high potential and which have a high activity, such as platinum or palladium, have been mainly used. However, since these noble metals are expensive and limited in resource amount, development of substitutable catalysts has been desired.

Further, there has been a problem that the noble metals used on the surface of a cathode may be dissolved under an acidic atmosphere and are not suitable for uses requiring long-term durability. Accordingly, it has been strongly demanded that catalysts are developed which are not corroded under an acidic atmosphere and have excellent durability and high oxygen reducing ability.

As a catalyst substituted for noble metals, there have been reported those entirely free of noble metals, such as base metal carbides, base metal oxides, base metal carbonitroxides, chalcogen compounds, and carbon catalysts. These materials are inexpensive and abundant in resource amounts as compared with noble metal materials such as platinum.

As such a catalyst, for example, Patent Document 1 discloses a cubic titanium carbonitride powder, obtained by heat-treating a mixture of any of titanium oxide, a titanium powder, and titanium hydride with acetylene black, as a catalyst for an oxygen-reducing electrode used in a polymer electrolyte fuel cell. Patent Document 1 describes that the titanium carbonitride powder has a high oxygen reduction onset potential and is stable in an acidic electrolyte and, in a polymer electrolyte fuel cell in which the titanium carbonitride powder is used as an oxygen-reducing electrode, reduction in the efficiency of the fuel cell due to a crossover of a fuel does not occur.

Further, Patent Document 2 discloses a catalyst comprising a carbonitroxide of titanium as a catalyst used in a fuel cell and describes a method for producing the catalyst wherein the carbonitroxide of titanium is produced by heat treatment of titanium carbonitride in an inert gas containing an oxygen gas and a hydrogen gas. Patent Document 2 describes that, since the catalyst has a rutile-type structure, is uncorroded and stable in an acidic electrolyte or at a high potential, and is inexpensive as compared with platinum, a fuel cell including the catalyst is comparatively inexpensive and has excellent performance.

Further, Patent Document 3 discloses an electrode catalyst obtained by wet-blending a mixed material containing a first material which is a metal compound constituted by one or more metal elements selected from the group consisting of groups 4A and 5A and one or more nonmetallic elements selected from the group consisting of a hydrogen atom, a nitrogen atom, a chlorine atom, a carbon atom, a boron atom and oxygen atom as well as a second material which is a carbon material precursor; and then burning the resultant under the condition where the second material can be transformed into a carbon material, specifically, at 400 to 1100°C. Patent Document 3 describes that such an electrode catalyst can be preferably used in an acidic electrolyte and has comparatively high activity. However, the electrode catalyst that is specifically disclosed in Patent Document 3 is only a monoclinic or tetragonal electrode catalyst including zirconium as a metal element, but no electrode catalyst including a metal element other than zirconium is specifically disclosed. Further, as for a crystal shape, Patent Document 3 does not describe any crystal shape other than monoclinic and tetragonal shapes and does not describe even a suggestion of a cubic crystal.

As described above, various attempts for catalysts substituted for noble metals have been made. However, a catalyst substituted for noble metals, having higher durability, has been even currently demanded.

EP 2 251 081 A1 discloses a catalyst comprising an oxycarbonitride of titanium.
EP 2 187 469 A1 discloses an electrocatalyst comprising a metal oxide obtained by thermally decomposing a metal organic compound.

Citation List

Patent Documents

Patent Document 1:   JP 2007-257888 A
Patent Document 2:   WO 2009/107518
Patent Document 3:   JP 2009-255053 A

SUMMARY OF INVENTION

PROBLEMS TO BE SOLVED BY INVENTION

The present invention seeks to overcome such problems as seen in conventional technologies.
It is an object of the present invention to provide an oxygen reducing catalyst that is inexpensive and has high catalytic activity and high durability using a transition metal (such as titanium); and a method for producing a fuel cell electrode catalyst using the oxygen reducing catalyst.

SOLUTION TO PROBLEM

The present invention relates to the following [1] to [17].

[1] An oxygen reduction catalyst comprising titanium, carbon, nitrogen, and oxygen as constituent elements, and at least one transition metal element M2 selected from iron, nickel, chromium, cobalt, vanadium, and manganese, wherein

$0.1 < x \le 7$, $0.01 < y \le 2$, and $0.05 < z \le 0.6$ are met when a ratio of the number of atoms of each of the constituent elements (titanium: carbon: nitrogen: oxygen) is represented by $1 : x : y : z$;
in XRD measurement using a Cu-K$\alpha$ ray, peaks are each present in at least regions A and B among regions A to D which occupy 2$\theta$ ranges described below:

A: 42° to 43°,
B: 36.5° to 37°,
C: 25° to 26°, and
D: 27° to 28°; and

each of maximum peak intensities $I_A$, $I_B$, $I_C$, and $I_D$ in the regions A to D satisfies both relationships described in expressions (1) and (2) described below:

$$I_A > I_B \qquad\qquad (1),$$

and

$$0.3 \le (I_A / (I_A + I_C + I_D)) \le 1 \qquad (2).$$

[2] A method for producing the oxygen reduction catalyst according to [1], the method comprising steps 1 to 3 described below:

step 1: the step of mixing at least a titanium-containing compound (1a), a nitrogen-containing organic compound (2), and a solvent to give a catalyst precursor solution;
step 2: the step of removing the solvent from the catalyst precursor solution to give a solid residue; and
step 3: the step of heat-treating the solid residue, obtained in the step 2, at a temperature of 900°C to 1400°C to give the oxygen reduction catalyst,
wherein any of the components to be mixed comprises an oxygen atom, and

wherein in the step 1, a compound (1b) containing at least one transition metal element M2 selected from iron, nickel, chromium, cobalt, vanadium, and manganese is further added.

[3] The method according to [2], wherein in the step 1, a compound (3) containing at least one element selected from the group consisting of boron, phosphorus, and sulfur as well as fluorine is further added.

[4] The method according to [3], wherein the compound (3) is at least one selected from the group consisting of boric acid derivatives containing fluorine, sulfonic acid derivatives containing fluorine, and phosphoric acid derivatives containing fluorine.

[5] The method according to any one of [2] to [4], wherein the solvent comprises alcohol or water.

[6] The method according to any one of [2] to [5], wherein the titanium-containing compound (1a) is one or more selected from the group consisting of titanium complexes as well as phosphates, sulfates, nitrates, organic acid salts, oxyhalides, alkoxides, halides, perhalates, and hypohalites of titanium.

[7] The method according to any one of [2] to [6], wherein the nitrogen-containing organic compound (2) has, in its molecule, one or more selected from amino group, nitrile group, imido group, imine group, nitro group, amide group, azido group, aziridine group, azo group, isocyanate group, isothiocyanate group, oxime group, diazo group, nitroso group, pyrrole ring, porphyrin ring, imidazole ring, pyridine ring, pyrimidine ring, and pyrazine ring.

[8] The method according to any one of [2] to [7], wherein the nitrogen-containing organic compound (2) has, in its molecule, one or more selected from hydroxyl group, carboxyl group, formyl group, halocarbonyl group, sulfonate group, phosphate group, ketone group, ether group, and ester group.

[9] The method according to any one of [2] to [8], wherein in the step 3, the solid residue is heat-treated in a non-oxidizing atmosphere.

[10] The method according to [9], wherein the non-oxidizing atmosphere is an atmosphere containing nitrogen.

[11] The method according to [9], wherein the non-oxidizing atmosphere is an atmosphere containing 1% by volume or more and 20% by volume or less of a hydrogen gas.

[12] A fuel cell electrode catalyst comprising the oxygen reduction catalyst according to [1].

[13] An ink comprising the oxygen reduction catalyst according to [1].

[14] A fuel cell catalyst layer produced using the ink according to [13].

[15] An electrode comprising the fuel cell catalyst layer according to [14] and a gas diffusion layer.

[16] A membrane electrode assembly comprising: an anode; a cathode comprising the fuel cell catalyst layer according to [14]; and an electrolyte membrane between the anode and the cathode.

[17] A polymer electrolyte fuel cell comprising the membrane electrode assembly according to [16].

ADVANTAGEOUS EFFECT OF INVENTION

A fuel cell having high durability and high catalytic activity can be obtained by using the oxygen reduction catalyst of the present invention as a fuel cell electrode catalyst.

BRIEF DESCRIPTION OF THE DRAWINGS

[Fig. 1] Fig. 1 is a powder X-ray diffraction spectrum of a catalyst (1) of Example 1.
[Fig. 2] Fig. 2 is an example of an exploded cross-sectional view of a single cell of a polymer electrolyte fuel cell.
[Fig. 3] Fig. 3 is a curve that represents a variation with time of a cell voltage in the case of conducting a current source load measurement test of a single cell (1) of Example 1.
[Fig. 4] Fig. 4 is a powder X-ray diffraction spectrum of a catalyst (2) of Example 2.
[Fig. 5] Fig. 5 is a curve that represents a variation with time of a cell voltage in the case of conducting a current source load measurement test of a single cell (2) of Example 2.
[Fig. 6] Fig. 6 is a powder X-ray diffraction spectrum of a catalyst (3) of Example 3.
[Fig. 7] Fig. 7 is a curve that represents a variation with time of a cell voltage in the case of conducting a current source load measurement test of a single cell (3) of Example 3.
[Fig. 8] Fig. 8 is a powder X-ray diffraction spectrum of a catalyst (4) of Example 4.
[Fig. 9] Fig. 9 is a curve that represents a variation with time of a cell voltage in the case of conducting a current source load measurement test of a single cell (4) of Example 4.
[Fig. 10] Fig. 10 is a powder X-ray diffraction spectrum of a catalyst (5) of Example 5.
[Fig. 11] Fig. 11 is a curve that represents a variation with time of a cell voltage in the case of conducting a current source load measurement test of a single cell (5) of Example 5.
[Fig. 12] Fig. 12 is a powder X-ray diffraction spectrum of a catalyst (6) of Example 6.
[Fig. 13] Fig. 13 is a curve that represents a variation with time of a cell voltage in the case of conducting a current source load measurement test of a single cell (6) of Example 6.

[Fig. 14] Fig. 14 is a powder X-ray diffraction spectrum of a catalyst (7) of Example 7.

[Fig. 15] Fig. 15 is a curve that represents a variation with time of a cell voltage in the case of conducting a current source load measurement test of a single cell (7) of Example 7.

[Fig. 16] Fig. 16 is a powder X-ray diffraction spectrum of a catalyst (8) of Example 8.

[Fig. 17] Fig. 17 is a curve that represents a variation with time of a cell voltage in the case of conducting a current source load measurement test of a single cell (8) of Example 8.

[Fig. 18] Fig. 18 is a powder X-ray diffraction spectrum of a catalyst (9) of Example 9.

[Fig. 19] Fig. 19 is a curve that represents a variation with time of a cell voltage in the case of conducting a current source load measurement test of a single cell (9) of Example 9.

[Fig. 20] Fig. 20 is a powder X-ray diffraction spectrum of a catalyst (10) of Comparative Example 1.

[Fig. 21] Fig. 21 is a curve that represents a variation with time of a cell voltage in the case of conducting a current source load measurement test of a single cell (10) of Comparative Example 1.

[Fig. 22] Fig. 22 is a powder X-ray diffraction spectrum of a catalyst (11) of Comparative Example 2.

[Fig. 23] Fig. 23 is a powder X-ray diffraction spectrum of a catalyst (12) of Comparative Example 3.

[Fig. 24] Fig. 24 is a powder X-ray diffraction spectrum of a catalyst (13) of Comparative Example 4.

[Fig. 25] Fig. 25 is a curve that represents a variation with time of a cell voltage in the case of conducting a current source load measurement test of a single cell (13) of Comparative Example 4.

[Fig. 26] Fig. 26 is a powder X-ray diffraction spectrum of a catalyst (14) of Comparative Example 5.

[Fig. 27] Fig. 27 is a curve that represents a variation with time of a cell voltage in the case of conducting a current source load measurement test of a single cell (14) of Comparative Example 5.

[Fig. 28] Fig. 28 is a powder X-ray diffraction spectrum of a catalyst (15) of Comparative Example 6.

[Fig. 29] Fig. 29 is a curve that represents a variation with time of a cell voltage in the case of conducting a current source load measurement test of a single cell (15) of Comparative Example 6.

DESCRIPTION OF EMBODIMENTS

[Oxygen Reduction Catalyst]

The present inventors have found that among catalysts having a transition metal element M1, carbon, nitrogen, and oxygen as constituent elements, a catalyst having titanium as the transition metal element M1 and a specific XRD pattern has high durability as an oxygen reduction catalyst.

1 Specifically, the oxygen reduction catalyst of the present invention (hereinafter also referred to as a "catalyst (A)") comprises titanium, carbon, nitrogen, and oxygen as constituent elements, wherein in XRD measurement using a Cu-K$\alpha$ ray, peaks are each present in at least regions A and B among regions A to D which occupy $2\theta$ ranges described below:

A: 42° to 43°,
B: 36.5° to 37°,
C: 25° to 26°, and
D: 27° to 28°; and

each of maximum peak intensities $I_A$, $I_B$, $I_C$, and $I_D$ in the regions A to D satisfies both relationships described in expressions (1) and (2) described below:

$$I_A > I_B \qquad (1),$$

and

$$0.3 \leq (I_A / (I_A + I_C + I_D)) \leq 1 \qquad (2).$$

The regions A and B are included in regions showing a first peak (hereinafter may be referred to as a "peak A") and a second peak (hereinafter may be referred to as a "peak B"), which peaks are attributed to a cubic Ti compound, respectively. The regions C and D are regions showing a peak attributed to anatase-type $TiO_2$ (hereinafter may be referred to as a "peak C") and a peak attributed to rutile-type $TiO_2$ (hereinafter may be referred to as a "peak D"), respectively.

When plural peaks are present in one region, the peak having the maximum intensity of the peaks may be adopted as any one of the peaks A to D. However, noise peaks are not regarded as the peak. Therefore, it is preferable that a ratio of a signal (S) and a noise (N) (S/N ratio) is sufficiently high and the peaks A to D are detected at an S/N ratio of at least 2 or more.

The catalyst (A) of the present invention has titanium, carbon, nitrogen, and oxygen as constituent elements, but the present inventors assume that the crystal structure thereof is similar to a crystal structure that can be included in a Ti compound. Accordingly, in the catalyst (A) of the present invention, a peak attributed to a cubic structure is presumed to appear at a position similar to that of a peak attributed to a cubic Ti compound. Thus, in accordance with the present invention, the presence of the cubic structure is defined by the presence of a peak appearing at a position similar to that of the peak attributed to the cubic Ti compound. Specifically, the presence of the cubic structure is defined by the presence of a peak shown in the above region A or B, which can be distinguished from a peak originating from a portion having an anatase-type structure or a rutile-type structure.

However, some peaks which can appear in the above regions A and B may include a peak attributed to a structure other than a cubic structure and, when attention is paid to one region of the above regions A and B, the presence of a peak attributed to a cubic structure may not be always judged based on the presence of a peak in the region. Thus, attention is paid to a tendency that the maximum intensities $I_A$ and $I_B$ of peaks appearing in the above regions A and B have a relationship of $I_A > I_B$ when the catalyst (A) of the present invention has a cubic structure, and the above expression (1) is defined so that a peak attributed to the cubic structure can be more surely judged.

Although it is ideal that the catalyst (A) of the present invention consists of a cubic structure in view of obtaining high durability, there may be also contained a portion having an anatase-type structure and a rutile-type structure. However, even in such a case, the higher percentage of the cubic structure is preferred from the viewpoint of high durability. Typical peaks which are attributed to the anatase-type structure and the rutile-type structure appear in the above regions C and D, respectively. Accordingly, with paying attention to this point, in accordance with the present invention, the percentage of a portion having a cubic structure being not less than a certain level is defined by defining the intensity of a peak appearing in the above region A based on the intensities of peaks appearing in the above regions C and D being not less than a certain level in the form of the above expression (2).

In the catalyst (A) of the present invention, a value of $(I_A/(I_A+I_C+I_D))$ is specifically 0.3 or more. However, when the catalyst (A) of the present invention is used as a fuel cell electrode catalyst, a voltage drop per unit time during using a fuel cell tends to be decreased with the value of $(I_A/(I_A+I_C+I_D))$ being closer to 1, i.e., with increasing the percentage of the cubic structure in the catalyst of the present invention. This means that durability as the fuel cell electrode catalyst is increased with increasing the percentage of the cubic structure in the catalyst (A) of the present invention. Accordingly, in the catalyst of the present invention, the value of $(I_A/(I_A+I_C+I_D))$ is preferably 0.6 or more, further preferably 0.7 or more, particularly preferably 0.8 or more.

From the above viewpoint, in the present invention, a structure that satisfies the relationships shown in the above expressions (1) and (2) is referred to as a "cubic structure".

Further, $0.1 < x \leq 7$, $0.01 < y \leq 2$, and $0.05 < z \leq 0.6$ are met assuming that a ratio of the number of atoms of each of titanium, carbon, nitrogen, and oxygen constituting the catalyst (A) is represented as titanium: carbon: nitrogen: oxygen = 1: x: y: z.

In terms of high activity as the oxygen reduction catalyst, the range of x is preferably $0.15 \leq x \leq 5.0$, more preferably $0.3 \leq x \leq 4$, particularly preferably $0.6 \leq x \leq 3$; the range of y is preferably $0.05 \leq y \leq 1.5$, more preferably $0.2 \leq y \leq 1$, particularly preferably $0.35 \leq y \leq 0.9$; and the range of z is $0.05 \leq z \leq 0.6$.

Further, the catalyst (A) includes at least one transition metal element M2 selected from iron, nickel, chromium, cobalt, vanadium, and manganese as an optional second transition metal element, in addition to titanium which is an essential transition metal element M1. Of these, it is preferable to include iron, chromium, and cobalt and it is particularly preferable to include iron because of improving a cell voltage in a fuel cell in which the catalyst of the present invention is used as a fuel cell electrode catalyst. $0 < a \leq 0.3$, $0.1 < x \leq 7$, $0.01 < y \leq 2$, and $0.05 < z \leq 0.6$ are preferably met when a ratio of the number of atoms of each of titanium, the transition metal element M2, carbon, nitrogen, and oxygen constituting the catalyst (A) is represented as titanium: transition metal element M2: carbon: nitrogen: oxygen = 1: a: x: y: z. The catalyst (A) has higher performance when comprising the transition metal element M2 as described above.

In terms of high activity as the oxygen reduction catalyst, the preferable ranges of x, y, and z are as mentioned above; and the range of a is more preferably $0 \leq a \leq 0.3$, further preferably $0 \leq a \leq 0.2$, particularly preferably $0 \leq a \leq 0.1$.

The values of a, x, y, and z are those as measured by the method adopted in Examples described later.

The reason why the performance of the catalyst (A) is improved by the presence of the transition metal element M2 (at least one metal element selected from iron, nickel, chromium cobalt, vanadium, and manganese) is presumed as described below.

(1) The transition metal element M2 or a compound including the transition metal element M2 acts as a catalyst for forming a bond between a titanium atom and a nitrogen atom when the oxygen reduction catalyst is synthesized.

(2) Even when the oxygen reduction catalyst is used under such a high-potential and highly-oxidizing atmosphere that titanium is eluted, further elution of titanium is prevented by passivating the transition metal element M2.

(3) Sintering of a heat-treated product, i.e., reduction in specific surface area is prevented when heat treatment is performed in a step 3 in a production method described later.

(4) Presence of titanium, the transition metal element M2, and in the oxygen reduction catalyst results in deviation of a charge in a site where both metal element atoms are adjacent to each other and in a substrate adsorption or reaction or the desorption of a product, which cannot be caused by an oxygen reduction catalyst having only a transition metal element M1 as a metal element.

The catalyst (A) of the present invention has titanium and preferably a transition metal element other than titanium as well as each atom of carbon, nitrogen and oxygen and has a cubic structure composed of one or more of an oxide, a carbide, and a nitride of the transition metal element. Judging from the results of crystal structure analysis by X-ray diffraction analysis of and the results of elemental analysis of the catalyst (A), the catalyst is presumed to have a structure in which a site of an oxygen atom in an oxide structure is substituted by a carbon atom or a nitrogen atom while having the oxide structure of the transition metal element or a structure in which a site of a carbon atom or a nitrogen atom is substituted by an oxygen atom while having the structure of a carbide, nitride, or carbonitride of the transition metal element or to be a mixture including the structures.

[Method for Producing Oxidation-Reduction Catalyst]

The present invention also provides a method for producing the catalyst (A) mentioned above.

In other words, the method for producing the oxidation-reduction catalyst of the present invention is a method for producing the catalyst (A) mentioned above, comprising:

step 1: a step of mixing at least a titanium-containing compound (1a), a nitrogen-containing organic compound (2), and a solvent to give a solution (in the present specification, also referred to as a "catalyst precursor solution");
step 2: a step of removing the solvent from the catalyst precursor solution to give a solid residue; and
step 3: a step of heat-treating the solid residue, obtained in the step 2, at a temperature of 900°C to 1400°C to give an oxygen reduction catalyst,

(wherein any of the components to be mixed comprises an oxygen atom).

In the present specification, an atom and an ion are referred to as an "atom" without being strictly distinguished from each other unless special circumstance requires otherwise.

(Step 1)

In the step 1, at least a transition metal-containing compound (1), a nitrogen-containing organic compound (2), and a solvent are mixed to give a catalyst precursor solution. Transition metal elements constituting the transition metal-containing compound (1) are classified broadly into a first transition metal element M1 as an essential transition metal element and a second transition metal element M2 which is optionally used. Titanium is used as the first transition metal element M1 in the present invention. Accordingly, in the step 1 in the present invention, at least a titanium-containing compound (1a), the nitrogen-containing organic compound (2), and the solvent are mixed to give the catalyst precursor solution.

To obtain the catalyst precursor solution, a compound (1b) containing at least one transition metal element M2 selected from iron, nickel, chromium, cobalt, vanadium, and manganese (hereinafter also referred to as a "second transition metal-containing compound (1b)" or simply a "compound (1b)") can be further added as a compound containing the second transition metal element M2 and a compound (3) containing at least one element A selected from the group consisting of boron, phosphorus, and sulfur as well as fluorine (hereinafter also simply referred to as a "compound (3)") may be further added.

In the present specification, hereinafter, the term "transition metal-containing compound (1)" is used to have a meaning encompassing a "titanium-containing compound (1a)" and a "compound (1b) containing at least one transition metal element M2 selected from iron, nickel, chromium, cobalt, vanadium, and manganese".

Examples of mixing procedures include:

procedure (i): putting a solvent in one container, adding thereto the transition metal-containing compound (1), the nitrogen-containing organic compound (2), and optionally the compound (3), dissolving them, and mixing them; and

procedure (ii): preparing a solution of the transition metal-containing compound (1), and a solution of the nitrogen-containing organic compound (2) or a solution of the nitrogen-containing organic compound (2) and the compound (3), and mixing them.

When a solvent does not allow each component to have high solubility therein, the procedure (ii) is preferable. When the transition metal-containing compound (1) is, for example, a metal halide described later, the procedure (i) is preferable, while when the transition metal-containing compound (1) is, for example, a metal alkoxide or a metal complex described later, the procedure (ii) is preferable.

When a titanium-containing compound (1a) and a second transition metal-containing compound (1b) are used as the transition metal-containing compound (1), a preferable procedure in the procedure (ii) includes:

procedure (ii'): preparing a solution of the titanium-containing compound (1a), and a solution of the second transition metal-containing compound (1b) and the nitrogen-containing organic compound (2) or a solution of the second transition metal-containing compound (1b), the nitrogen-containing organic compound (2) and the compound (3), and mixing them.

The mixing operation is preferably performed with stirring, in order to increase the dissolution rate of each component in a solvent.

When the solution of the transition metal-containing compound (1) and the solution of the nitrogen-containing organic compound (2) are mixed, it is preferable that one solution is supplied to the other solution at a constant rate with a pump or the like.

It is also preferable that the solution of the titanium-containing compound (1a) is added little by little to the solution of the nitrogen-containing organic compound (2) or the solution of the nitrogen-containing organic compound (2) and the compound (3) (i.e., the whole amount is not added at a time). When the second transition metal-containing compound (1b) is used together as the transition metal-containing compound (1), it is also preferable that the solution of the titanium-containing compound (1a) is added little by little to the solution of the nitrogen-containing organic compound (2) and the second transition metal-containing compound (1b) or the solution of the nitrogen-containing organic compound (2), the compound (3) and the second transition metal-containing compound (1b) (i.e., the whole amount is not added at a time).

The catalyst precursor solution is assumed to contain a reaction product of the transition metal-containing compound (1) and the nitrogen-containing organic compound (2). The solubility of this reaction product in a solvent also varies depending on the combination of the transition metal-containing compound (1), the nitrogen-containing organic compound (2), a solvent, and the like.

Therefore, when the transition metal-containing compound (1) is, for example, a metal alkoxide or a metal complex, it is preferable that the catalyst precursor solution does not contain a precipitate or a dispersoid, although this depends on the type of solvent and the type of the nitrogen-containing organic compound (2), and, even if the precipitate or the dispersoid are contained, it is preferable that the amount thereof is small (for example, the amount is 10 mass% or less, preferably 5 mass% or less, more preferably 1 mass% or less of the total amount of the solution). Further, the catalyst precursor solution is preferably clear and a value thereof measured by the method for measuring liquid transparency according to JIS K0102 is preferably 1 cm or more, more preferably 2 cm or more, further preferably 5 cm or more.

On the other hand, when the transition metal-containing compound (1) is, for example, a metal halide, a precipitate which is assumed to be the reaction product of the transition metal-containing compound (1) and the nitrogen-containing organic compound (2) is readily generated in the catalyst precursor solution, although this depends on the type of solvent and the type of the nitrogen-containing organic compound (2).

In the step 1, the transition metal-containing compound (1), the nitrogen-containing organic compound (2), and a solvent may also be put in a pressure-applicable container such as an autoclave and mixed with being pressurized at a pressure of ordinary pressure or more.

The temperature at which the transition metal-containing compound (1), the nitrogen-containing organic compound (2), and a solvent are mixed is preferably 0 to 60°C. In view of a complex being presumed to be formed from the transition metal-containing compound (1) and the nitrogen-containing organic compound (2), if this temperature is excessively high and the solvent contains water, the complex may be hydrolyzed to give a hydroxide to precipitate, leading to the failure to give an excellent catalyst. In contrast, if this temperature is excessively low, the transition metal-containing compound (1) is precipitated before the complex is formed, leading to the failure to give an excellent catalyst.

<Transition Metal-Containing Compound (1)>

A portion or the entirety of the transition metal-containing compound (1) is a titanium-containing compound (1a) as a compound containing a transition metal element M1. In other words, in the present invention, titanium is used as the transition metal element M1 from the viewpoint of a cost and the performance of an obtained catalyst.

The titanium-containing compound (1a) preferably contains at least one selected from an oxygen atom and halogen atoms, and specific examples thereof include titanium complexes as well as phosphates, sulfates, nitrates, organic acid salts, oxyhalides (intermediate hydrolysates of halides), alkoxides, halides, perhalates, and hypohalites of titanium. Of these, a titanium-containing compound having an oxygen atom is preferably used. These may be used singly or in combination of two or more kinds.

As the titanium-containing compound (1a) containing an oxygen atom, alkoxides, acetylacetonate complexes, oxychlorides, and sulfates of titanium are preferred; in view of a cost, alkoxides and acetylacetonate complexes are more preferred; and, from the viewpoint of solubility in a solvent in the liquid phase, alkoxides and acetylacetonate complexes are further preferred.

As the alkoxides of titanium, methoxide, propoxide, isopropoxide, ethoxide, butoxide, and isobutoxide of titanium are preferred; and, of these, isopropoxide, ethoxide, and butoxide are more preferred. The alkoxide of titanium may have one kind of alkoxy group or may have two or more kinds of alkoxy groups.

As the halides of titanium, chlorides, bromides, and iodides of titanium are preferred, while as the oxyhalides of titanium, oxychlorides, oxybromides, and oxyiodides of titanium are preferred.

As the perhalates of titanium, perchlorates of titanium are preferred, while as the hypohalites of titanium, hypochlorites of titanium are preferred.

Specific examples of the titanium-containing compound (1a) include:

titanium compounds such as titanium tetramethoxide, titanium tetraethoxide, titanium tetrapropoxide, titanium tetraisopropoxide, titanium tetrabutoxide, titanium tetraisobutoxide, titanium tetrapentoxide, titanium tetraacetylacetonate, titanium oxydiacetylacetonate, bis[tris(2,4-pentanedionato)titanium(IV)] hexachlorotitanate(IV) ($[Ti(acac)_3]_2[TiCl_6]$), titanium tetrachloride, titanium trichloride, titanium oxychloride, titanium tetrabromide, titanium tribromide, titanium oxybromide, titanium tetraiodide, titanium triiodide, and titanium oxyiodide. These may be used singly or in combination of two or more kinds.

Of these compounds, in view of allowing the resultant catalyst to be fine particles having a uniform particle diameter and to have high activity, preferred are:

titanium tetraethoxide, titanium tetrachloride, titanium oxychloride, titanium tetraisopropoxide, and titanium tetraacetylacetonate; and
more preferred are:

titanium tetraisopropoxide and titanium tetraacetylacetonate.

Also, the transition metal-containing compound (1) may be a combination of the above titanium-containing compound (1a) and a compound (1b) that contains at least one transition metal element M2 selected from iron, nickel, chromium, cobalt, vanadium, and manganese (i.e., "second transition metal-containing compound (1b)") as an optional transition metal element. The use of the second transition metal-containing compound (1b) improves the performance of the resultant catalyst.

From the observation of the XPS spectrum of the catalyst, the use of the second transition metal-containing compound (1b) is presumed to promote the formation of a bond between the transition metal element M1 (e.g., titanium) and a nitrogen atom and to thus improve the performance of the catalyst.

As the transition metal element M2 in the second transition metal-containing compound (1b), from the viewpoint of the balance between a cost and the performance of the resultant catalyst, iron and chromium are preferred; and iron is particularly preferred.

Specific examples of the second transition metal-containing compound (1b) include:

iron compounds such as iron(II) chloride, iron(III) chloride, iron(III) sulfate, iron(II) sulfide, iron(III) sulfide, potassium ferrocyanide, potassium ferricyanide, ammonium ferrocyanide, ammonium ferricyanide, iron ferrocyanide, iron (II) nitrate, iron (III) nitrate, iron (II) oxalate, iron (III) oxalate, iron(II) phosphate, iron(III) phosphate, ferrocene, iron(II) hydroxide, iron(III) hydroxide, iron(II) oxide, iron (III) oxide, triiron tetraoxide, iron(II) acetate, iron(II) lactate, and iron(III) citrate;
nickel compounds such as nickel(II) chloride, nickel(II) sulfate, nickel(II) sulfide, nickel(II) nitrate, nickel(II) oxalate, nickel(II) phosphate, nickelocene, nickel(II) hydroxide, nickel(II) oxide, nickel(II) acetate, and nickel (II) lactate;
chromium compounds such as chromium(II) chloride, chromium(III) chloride, chromium(III) sulfate, chromium(III) sulfide, chromium(III) nitrate, chromium(III) oxalate, chromium(III) phosphate, chromium(III) hydroxide, chromium(II) oxide, chromium(III) oxide, chromium(IV) oxide, chromium(VI) oxide, chromium(II) acetate, chromium(III) acetate, and chromium(III) lactate;

cobalt compounds such as cobalt(II) chloride, cobalt(III) chloride, cobalt(II) sulfate, cobalt(II) sulfide, cobalt(II) nitrate, cobalt(III) nitrate, cobalt(II) oxalate, cobalt(II) phosphate, cobaltocene, cobalt(II) hydroxide, cobalt(II) oxide, cobalt(III) oxide, tricobalt tetroxide, cobalt(II) acetate, and cobalt(II) lactate;

vanadium compounds such as vanadium(II) chloride, vanadium(III) chloride, vanadium(IV) chloride, vanadium(IV) oxysulfate, vanadium(III) sulfide, vanadium(IV) oxyoxalate, vanadium metallocene, vanadium(V) oxide, vanadium acetate, and vanadium citrate; and

manganese compounds such as manganese(II) chloride, manganese(II) sulfate, manganese(II) sulfide, manganese(II) nitrate, manganese(II) oxalate, manganese(II) hydroxide, manganese(II) oxide, manganese(III) oxide, manganese(II) acetate, manganese (II) lactate, and manganese citrate. These may be used singly or in combination of two or more kinds.

Of these compounds, preferred are:

iron(II) chloride, iron(III) chloride, potassium ferrocyanide, potassium ferricyanide, ammonium ferrocyanide, ammonium ferricyanide, iron(II) acetate, iron(II) lactate;

nickel(II) chloride, nickel(II) acetate, nickel(II) lactate;

chromium(II) chloride, chromium(III) chloride, chromium(II) acetate, chromium(III) acetate, chromium(III) lactate;

cobalt(II) chloride, cobalt(III) chloride, cobalt(II) acetate, cobalt(II) lactate;

vanadium(II) chloride, vanadium(III) chloride, vanadium(IV) chloride, vanadium(IV) oxysulfate, vanadium acetate, vanadium citrate; and

manganese(II) chloride, manganese(II) acetate, manganese(II) lactate,

and further preferred are:

iron(II) chloride, iron(III) chloride, potassium ferrocyanide, potassium ferricyanide, ammonium ferrocyanide, ammonium ferricyanide, iron(II) acetate, iron(II) lactate, chromium(II) chloride, chromium(III) chloride, chromium(II) acetate, chromium(III) acetate, and chromium(III) lactate.

<Nitrogen-Containing Organic Compound (2)>

As the nitrogen-containing organic compound (2) used in the production method of the present invention, preferred is a compound capable of being a ligand that can be coordinated to a metal atom in the transition metal-containing compound (1) (preferably, a compound capable of forming a mononuclear complex) ; and further preferred is a compound capable of being a multidentate ligand (preferably, a bidentate ligand or a tridentate ligand) (compound capable of forming a chelate).

The nitrogen-containing organic compounds (2) may be used singly or in combination of two or more kinds.

The nitrogen-containing organic compound (2) preferably has a functional group such as amino group, nitrile group, imido group, imine group, nitro group, amide group, azido group, aziridine group, azo group, isocyanate group, isothiocyanate group, oxime group, diazo group, or nitroso group, or a ring such as pyrrole ring, porphyrin ring, imidazole ring, pyridine ring, pyrimidine ring, or pyrazine ring (these functional groups and rings are also collectively referred to as "nitrogen-containing molecular group").

The nitrogen-containing organic compound (2), by containing the nitrogen-containing molecular group in its molecule, is assumed to be more strongly coordinated to a transition metal atom derived from the transition metal-containing compound (1) after subjected to the mixing in the step 1.

Among the nitrogen-containing molecular group, amino group, imine group, amide group, pyrrole ring, pyridine ring, and pyrazine ring are more preferred; amino group, imine group, pyrrole ring, and pyrazine ring are further preferred; and amino group and pyrazine ring are particularly preferred because of allowing the resultant catalyst to have particularly high activity.

Specific examples of the nitrogen-containing organic compound (2) (wherein the compound does not contain an oxygen atom) include melamine, ethylenediamine, triazole, acetonitrile, acrylonitrile, ethyleneimine, aniline, pyrrole, polyethyleneimine, and the like, and these may also be salts. Of these, ethylenediamine and salts thereof are preferred because of allowing the resultant catalyst to have high activity.

The nitrogen-containing organic compound (2) preferably has hydroxyl group, carboxyl group, formyl group, halocarbonyl group, sulfonate group, phosphate group, ketone group, ether group, or ester group (these are also collectively referred to as "oxygen-containing molecular group"). The nitrogen-containing organic compound (2), by containing the oxygen-containing molecular group in its molecule, is assumed to be more strongly coordinated to a transition metal atom derived from the transition metal-containing compound (1) after subjected to the mixing in the step 1.

Among the oxygen-containing molecular group, carboxyl group and formyl group are particularly preferred because of allowing the resultant catalyst to have particularly high activity.

As the nitrogen-containing organic compound (2) that contains an oxygen atom in its molecule, compounds having the nitrogen-containing molecular group and the oxygen-containing molecular group are preferred. Such compounds are assumed to be particularly strongly coordinated to a transition metal atom derived from the transition metal-containing compound (1) after subjected to the step 1.

As the compounds having the nitrogen-containing molecular group and the oxygen-containing molecular group, amino acids, which have amino group and carboxyl group, and derivatives thereof are preferable.

As the amino acids, preferred are alanine, arginine, asparagine, asparagine acid, cysteine, glutamine, glutamic acid, glycine, histidine, isoleucine, leucine, lysine, methionine, phenylalanine, serine, threonine, tryptophan, tyrosine, valine, norvaline, glycylglycine, triglycine, and tetraglycine; because of allowing the resultant catalyst to have high activity, alanine, glycine, lysine, methionine, and tyrosine are more preferred; and because of allowing the resultant catalyst to have extremely high activity, alanine, glycine, and lysine are particularly preferred.

Specific examples of the nitrogen-containing organic compound (2) that contains an oxygen atom in its molecule include, in addition to the above-described amino acids and the like, acylpyrroles such as acetylpyrrole, pyrrolecarboxylic acid, acylimidazoles such as acetylimidazole, carbonyldiimidazole, imidazolecarboxylic acid, pyrazole, acetanilide, pyrazinecarboxylic acid, piperidinecarboxylic acid, piperazinecarboxylic acid, morpholine, pyrimidinecarboxylic acid, nicotinic acid, 2-pyridinecarboxylic acid, 2,4-pyridinedicarboxylic acid, 8-quinolinol, and polyvinylpyrrolidone; because of allowing the resultant catalyst to have high activity, preferred are compounds capable of being a bidentate ligand: specifically, preferred are pyrrole-2-carboxylic acid, imidazole-4-carboxylic acid, 2-pyrazinecarboxylic acid, 2-piperidinecarboxylic acid, 2-piperazinecarboxylic acid, nicotinic acid, 2-pyridinecarboxylic acid, 2,4-pyridinedicarboxylic acid, and 8-quinolinol; and more preferred are 2-pyrazinecarboxylic acid and 2-pyridinecarboxylic acid.

The ratio (B/A) of the total number B of carbon atoms of the nitrogen-containing organic compound (2) used in the step 1 to the total number A of atoms of a transition metal element of the transition metal-containing compound (1) used in the step 1 is preferably 200 or less, more preferably 150 or less, further preferably 80 or less, particularly preferably 50 or less in terms of allowing the heat treatment in the step 3 to be performed while decreasing components eliminating as carbon compounds such as carbon dioxide and carbon monoxide, i.e., decreasing an emission gas during catalyst production; and the ratio is preferably 1 or more, more preferably 2 or more, further preferably 3 or more, particularly preferably 5 or more in terms of obtaining a catalyst having good activity.

The ratio (C/A) of the total number C of nitrogen atoms of the nitrogen-containing organic compound (2) used in the step 1 to the total number A of atoms of a transition metal element of the transition metal-containing compound (1) used in the step 1 is preferably 28 or less, more preferably 17 or less, further preferably 12 or less, particularly preferably 8.5 or less in terms of obtaining a catalyst having good activity; and the ratio is preferably 1 or more, more preferably 2.5 or more, further preferably 3 or more, particularly preferably 3.5 or more in terms of obtaining a catalyst having good activity. For example, when a compound containing one transition metal element per molecule is used as the transition metal-containing compound (1) and a compound containing one nitrogen per molecule is used as the nitrogen-containing organic compound (2), the nitrogen-containing organic compound (2) is preferably used in the above ratio of (C/A) mol to 1 mol of the transition metal-containing compound (1).

Assuming that the rate of the titanium-containing compound (1a) and the second transition metal-containing compound (1b) used in the step 1 is converted into the molar ratio (M1:M2) between titanium atoms and the atoms of the transition metal element M2 and is represented by M1:M2=1:a, the range of a is preferably $0 \leq a \leq 0.3$, further preferably $0 \leq a \leq 0.2$, particularly preferably $0 \leq a \leq 0.1$. For example, when the titanium-containing compound (1a) containing one titanium per molecule and the second transition metal-containing compound (1b) containing one transition metal element M2 per molecule are used as the transition metal-containing compounds (1), the second transition metal-containing compound (1b) is preferably used in the above ratio of a mol to 1 mol of the titanium-containing compound (1a).

<Compound (3)>

In the method for producing a catalyst of the present invention, a compound (3) containing at least one element A selected from the group consisting of boron, phosphorus, and sulfur as well as fluorine can be optionally used together. An oxygen reduction catalyst having further high catalytic activity is produced by using the compound (3) in the present invention.

Specific examples of the compound (3) containing at least one element A selected from the group consisting of boron, phosphorus, and sulfur as well as fluorine include boric acid derivatives containing fluorine, phosphoric acid derivatives containing fluorine, and sulfonic acid derivatives containing fluorine.

Examples of the boric acid derivatives containing fluorine include: for example,

quaternary ammonium tetrafluoroborates (e.g., tetra-n-butylammonium tetrafluoroborate, tetramethylammonium tetrafluoroborate, tetraethylammonium tetrafluoroborate, tetrapropylammonium tetrafluoroborate, tetrabutylammonium tetrafluoroborate, ethyltrimethylammonium tetrafluoroborate, diethyldimethylammonium tetrafluoroborate, triethylmethylammonium tetrafluoroborate, methyltripropylammonium tetrafluoroborate, ethyltripropylammonium tetrafluoroborate, trimethylpropylammonium tetrafluoroborate, ethyldimethylpropylammonium tetrafluoroborate, diethylmethylpropylammonium tetrafluoroborate, triethylpropylammonium tetrafluoroborate, dimethyldipropylammonium tetrafluoroborate, ethylmethyldipropylammonium tetrafluoroborate, diethyldipropylammonium tetrafluoroborate, trimethylbutylammonium tetrafluoroborate, ethyldimethylbutylammonium tetrafluoroborate, diethylmethylbutylammonium tetrafluoroborate, triethylbutylammonium tetrafluoroborate, tripropylbutylammonium tetrafluoroborate, dimethyldibutylammonium tetrafluoroborate, ethylmethyldibutylammonium tetrafluoroborate, diethyldibutylammonium tetrafluoroborate, and hexyltrimethylammonium tetrafluoroborate (the propyls include n-propyl and i-propyl; and the butyls include n-butyl, i-butyl, s-butyl, and t-butyl)),

quaternary pyridinium tetrafluoroborates (e.g., pyridinium tetrafluoroborate, 1-methylpyridinium tetrafluoroborate, 2-bromo-1-ethylpyridinium tetrafluoroborate, and 1-butylpyridinium tetrafluoroborate), and

quaternary imidazolium tetrafluoroborates (e.g., 1,3-dimethylimidazolium tetrafluoroborate, 1-ethyl-3-methylimidazolium tetrafluoroborate, 1,3-diethylimidazolium tetrafluoroborate, 1,2-dimethyl-3-ethylimidazolium tetrafluoroborate, 1,2-dimethyl-3-propylimidazolium tetrafluoroborate, and 1-butyl-3-methylimidazolium tetrafluoroborate);

fluoroalkylboric acids, of which all or some of the hydrogen atoms of the alkyl group are substituted by a fluorine atom (e.g., nonacosafluorotetradecylboric acid, heptacosafluorotridecylboric acid, pentacosafluorododecylboric acid, tricosafluoroundecylboric acid, henicosafluorodecylboric acid, nonadecafluorononylboric acid, heptadecafluorooctylboric acid, pentadecafluoroheptylboric acid, tridecafluorohexylboric acid, undecafluoropentylboric acid, nonafluorobutylboric acid, heptafluoropropylboric acid, pentafluoroethylboric acid, trifluoromethylboric acid, and 2,2,2-trifluoroethylboric acid);

monoesters and diesters of the fluoroalkylboric acids (e.g., methyl esters and ethyl esters); and

salts of the fluoroalkylboric acids (e.g., sodium salts, potassium salts, ammonium salts, methylammonium salts, dimethylammonium salts, trimethylammonium salts, and triethylammonium salts).

Examples of the phosphoric acid derivatives containing fluorine include:

hexafluorophosphates, for example, quaternary ammonium hexafluorophosphates (e.g., tetra-n-butylammonium hexafluorophosphate, tetramethylammonium hexafluorophosphate, tetraethylammonium hexafluorophosphate, tetrapropylammonium hexafluorophosphate, tetrabutylammonium hexafluorophosphate, ethyltrimethylammonium hexafluorophosphate, diethyldimethylammonium hexafluorophosphate, triethylmethylammonium hexafluorophosphate, methyltripropylammonium hexafluorophosphate, ethyltripropylammonium hexafluorophosphate, trimethylpropylammonium hexafluorophosphate, ethyldimethylpropylammonium hexafluorophosphate, diethylmethylpropylammonium hexafluorophosphate, triethylpropylammonium hexafluorophosphate, dimethyldipropylammonium hexafluorophosphate, ethylmethyldipropylammonium hexafluorophosphate, diethyldipropylammonium hexafluorophosphate, trimethylbutylammonium hexafluorophosphate, ethyldimethylbutylammonium hexafluorophosphate, diethylmethylbutylammonium hexafluorophosphate, triethylbutylammonium hexafluorophosphate, tripropylbutylammonium hexafluorophosphate, dimethyldibutylammonium hexafluorophosphate, ethylmethyldibutylammonium hexafluorophosphate, diethyldibutylammonium hexafluorophosphate, and hexyltrimethylammonium tetrafluorophosphate (the propyls include n-propyl, and i-propyl; and the butyls include n-butyl, i-butyl, s-butyl, and t-butyl),

quaternary pyridinium hexafluorophosphates (e.g., pyridinium hexafluorophosphate, 1-methylpyridinium hexafluorophosphate, and 2-bromo-1-ethylpyridinium hexafluorophosphate), and

quaternary imidazolium tetrafluorophosphates (e.g., 1,3-dimethylimidazolium tetrafluorophosphate, 1-ethyl-3-methylimidazolium tetrafluorophosphate, 1,3-diethylimidazolium tetrafluorophosphate, 1,2-dimethyl-3-ethylimidazolium tetrafluorophosphate, 1,2-dimethyl-3-propylimidazolium tetrafluorophosphate, 1-butyl-3-methylimidazolium tetrafluorophosphate);

hexafluorophosphoric acid;

salts of the hexafluorophosphoric acid (e.g., sodium salts, potassium salts, ammonium salts, alkylammonium (e.g., methylammonium, dimethylammonium, trimethylammonium, ethylammonium, diethylammonium, and triethylammonium) salts);

fluoroalkyl phosphate esters represented by the general formula: $(RO)_nP=O$ (wherein n is 1 to 3; and R is a fluoroalkyl group in which all or some of the hydrogen atoms of an alkyl group are substituted by a fluorine atom (e.g., nonacosafluorotetradecyl group, heptacosafluorotridecyl group, pentacosafluorododecyl group, tricosafluoroundecyl group, henicosafluorodecyl group, nonadecafluorononyl group, heptadecafluorooctyl group, pentadecafluoroheptyl group, tridecafluorohexyl group, undecafluoropentyl group, nonafluorobutyl group, heptafluoropropyl group, pentafluoroethyl group, trifluoromethyl group, and 2,2,2-trifluoroethyl group);

fluoroalkyl phosphoric amide represented by the general formula: $(RN)_3P=O$, $(RN)_2P=O(OH)$, or $(RN)P=O(OH)_2$ (wherein R represents the fluoroalkyl group);

fluoroalkyl phosphorous acid represented by the general formula $(RO)_3P$, $(RO)_2(OH)P$, or $(RO)(OH)_2P$ (wherein the fluoroalkyl group is represented);

fluoroalkyl phosphite amide represented by the general formula $(RN)_3P$, $(RN)_2P(OH)$, or $(RN)P(OH)_2$ (wherein R represents the fluoroalkyl group); and

fluoroalkylphosphonic acid represented by the general formula: $RPO(OH)_2$ (wherein R represents the fluoroalkyl group).

Examples of the sulfonic acid derivatives containing fluorine include:

fluoroalkylsulfonic acids in which all or some of the hydrogen atoms of an alkyl group are substituted by a fluorine atom (the number of carbon atoms is, for example, 1 to 30) (e.g., nonacosafluorotetradecylsulfonic acid, heptacosafluorotridecylsulfonic acid, pentacosafluorododecylsulfonic acid, tricosafluoroundecanesulfonic acid, henicosafluorodecylsulfonic acid, nonadecafluorononylsulfonic acid, heptadecafluorooctylsulfonic acid, pentadecafluoroheptylsulfonic acid, tridecafluorohexylsulfonic acid, undecafluoropentylsulfonic acid, nonafluorobutylsulfonic acid, heptafluoropropylsulfonic acid, pentafluoroethylsulfonic acid, trifluoromethylsulfonic acid, and 2,2,2-trifluoroethylsulfonic acid);

esters of the fluoroalkylsulfonic acids (e.g., methyl esters, ethyl esters, and aryl esters (e.g., phenyl ester));

salts of the fluoroalkylsulfonic acids (general formula: $A[RSO_3]$; R represents the fluoroalkyl group) (sodium salts, potassium salts, ammonium salts, alkylammonium (e.g., methylammonium, dimethylammonium, trimethylammonium, ethylammonium, diethylammonium, and triethylammonium) salts);

amides of the fluoroalkylsulfonic acids (general formula: $R\text{-}SO_2\text{-}NR^1R^2$, R represents the fluoroalkyl group; and $R^1$ and $R^2$ each independently represent a hydrocarbon group having 1 to 10 carbon atoms (e.g., methyl group, ethyl group, phenyl group), in which all or some of the hydrogen atoms may be substituted by a fluorine atom); and

acid anhydrides of the fluoroalkylsulfonic acids (general formula: $(R\text{-}SO_2)_2O$; R represents the fluoroalkyl group).

Examples of commercial products of the sulfonic acid derivatives containing fluorine include NAFION (registered trademark).

These may be used singly or in combination of two or more kinds.

In the present invention, of such compounds (3), a copolymer of tetrafluoroethylene and perfluoro[2-(fluorosulfonylethoxy)propylvinyl ether] is particularly preferred in terms of allowing a fuel cell to have an improved cell voltage in the case of using the resultant oxygen reduction catalyst as a fuel cell electrode catalyst.

The amount of the element A contained in the compound (3) used in the step (1) is typically 0.01 to 3 mol, preferably 0.01 to 2 mol, further preferably 0.01 to 1 mol, based on 1 mol of titanium atoms in the titanium-containing compound (1a) used in the step (1).

When the element A is only boron, the amount thereof is typically 0.01 to 3 mol, preferably 0.01 to 2 mol, further preferably 0.01 to 1 mol, based on the above-described criterion; when the element A is only phosphorus, the amount thereof is typically 0.01 to 3 mol, preferably 0.01 to 2 mol, further preferably 0.01 to 1 mol, based on the above-described criterion; and when the element A is only sulfur, the amount thereof is typically 0.01 to 3 mol, preferably 0.01 to 2 mol, further preferably 0.01 to 1 mol, based on the above-described criterion.

Further, the amount of fluorine contained in the compound (3) is typically 0.01 to 5 mol, preferably 0.02 to 4 mol, further preferably 0.03 to 3 mol, based on 1 mol of titanium atoms in the titanium-containing compound (1a).

The above-described amount of the compound (3) is an amount in a case in which a raw material other than the compound (3) used in the step (1) contains neither element A nor fluorine. It is preferable to appropriately reduce the amount of the compound (3) used in the step (1) when the raw material other than the compound (3) contains the element A or fluorine.

<Solvent>

Examples of the solvent include water, acetic acid, and alcohols. As the alcohols, ethanol, methanol, butanol, propanol, and ethoxyethanol are preferred; and ethanol and methanol are further preferred. The solvent preferably contains an acid to increase solubility; and as such acids, acetic acid, nitric acid, hydrochloric acid, phosphoric acid, and citric acid are preferred, and acetic acid and nitric acid are further preferred. These may be used singly or in combination of two or more kinds.

<Precipitation Suppressant>

A precipitation suppressant may also be used in the step 1. The clear catalyst precursor solution can be obtained with suppressing the occurrence of precipitation derived from the transition metal M1-containing compound. In the case where the transition metal M1-containing compound contains a halogen atom with the solvent being water alone or a combination of water and an alcohol, a strong acid such as hydrochloric acid is preferably added as the precipitation suppressant.

In the case where the transition metal M1-containing compound is a metal complex with the solvent being water alone or a combination of water and another compound, the precipitation suppressant is preferably a compound having a diketone structure; more preferably diacetyl, acetylacetone, 2,5-hexanedione, and dimedone.

The precipitation suppressant may be added in any stage of the step 1.

The precipitation suppressant is added so that the amount of the precipitation suppressant would be preferably 1 to 70 mass%, more preferably 2 to 50 mass%, further preferably 15 to 40 mass%, in 100 mass% of a transition metal-containing compound solution (solution that contains the transition metal-containing compound (1) but contains neither the nitrogen-containing organic compound (2) nor the compound (3)).

The precipitation suppressant is added preferably so that the amount of the precipitation suppressant would be preferably 0.1 to 40 mass%, more preferably 0.5 to 20 mass%, further preferably 2 to 10 mass% in 100 mass% of the catalyst precursor solution.

The precipitation suppressant may be added in any stage of the step 1.

In the step 1, preferably, a solution that contains the transition metal-containing compound (1) and the precipitation suppressant is prepared, and this solution is then mixed with the nitrogen-containing organic compound (2) and optionally the compound (3) to give a catalyst precursor solution. In the case of using the titanium-containing compound (1a) and the second transition metal-containing compound (1b) as the transition metal-containing compounds (1), in the step 1, preferably, a solution that contains the titanium-containing compound (1a) and the precipitation suppressant is prepared, and this solution is then mixed with the nitrogen-containing organic compound (2), the second transition metal-containing compound (1b), and optionally the compound (3) to give a catalyst precursor solution.

By performing the step 1 in this way, the occurrence of the precipitation can be more surely prevented.

<Components to be Mixed>

The catalyst (A) obtained by the production method of the present invention has not only titanium, carbon, and nitrogen but also oxygen as a constituent element. Considering that a non-oxidizing atmosphere is preferably used as an atmosphere in the case of performing the heat treatment in the step 3 as described later, it is demanded that a catalyst precursor that constitutes a solid residue has oxygen as a constituent element in a stage prior to the heat treatment in the step 3 in order for the catalyst (A) obtained by the production method of the present invention to surely have oxygen as the constituent element.

In order to obtain a solid residue containing such a catalyst precursor in the step 2 described later, a component containing an oxygen atom may also be used as any of components to be mixed in order to obtain the catalyst precursor solution in the step 1. The titanium-containing compound (1a), the nitrogen content organic compound (2), the solvent such as acetic acid, the optional second transition metal content compound (1b), the optional above compound (3), and the precipitation suppressant correspond to "components to be mixed" as used herein. When the step 1 is performed in an atmosphere containing oxygen, such as under atmospheric air or the like, oxygen may also be consequently included in "components to be mixed". In accordance with the present invention, among such "components to be mixed", any one or more selected from the titanium-containing compound (1a), the nitrogen-containing organic compound (2), the solvent, the optional second transition metal-containing compound (1b), and the optional above compound (3) preferably contain an oxygen atom. Of these, the titanium-containing compound (1a) and the nitrogen-containing organic compound (2) more preferably contain an oxygen atom. By using these, a solid residue containing a catalyst precursor having oxygen as a constituent element can be stably obtained without separately establishing a step of incorporating oxygen.

The solid residue containing the catalyst precursor having oxygen as a constituent element may also be obtained by using a component containing an oxygen atom as any of the components to be mixed in order to obtain the catalyst precursor solution in the step 1 or alternatively by performing the step 2 described later in an atmosphere containing oxygen, such as under atmospheric air or the like, to consequently mix the catalyst precursor solution with oxygen.

(Step 2)

In the step (2), the solvent is removed from the catalyst precursor solution obtained in the step 1 to give the solid residue.

The solvent removal may be performed in air, or may be performed under an atmosphere of an inert gas (for example, nitrogen, argon, and helium). As the inert gas, from the viewpoint of a cost, nitrogen and argon are preferred; and nitrogen is more preferred.

The temperature in the solvent removal may be ordinary temperature when the vapor pressure of the solvent is high, but from the viewpoint of mass production of the catalyst, temperature is preferably 30°C or more, more preferably 40°C or more, further preferably 50°C or more; and from the viewpoint of preventing decomposition of the catalyst precursor that is presumed to be a metal complex, such as a chelate, contained in the solution obtained in the step 1, the temperature is preferably 250°C or less, more preferably 150°C or less, further preferably 110°C or less.

The solvent removal may be performed under atmospheric pressure when the vapor pressure of the solvent is high, but may be performed under reduced pressure (e.g., 0.1 Pa to 0.1 MPa) in order to remove the solvent within a shorter period of time.

The solvent removal may be performed with the mixture obtained in the step 1 being allowed to stand still; however, in order to obtain a more homogenous solid residue, preferred is the solvent removal with the mixture being stirred.

Depending on solvent-removal methods or properties of the transition metal content compound (1), the nitrogen-containing organic compound (2), or the compound (3), the solid residue obtained in the step 2 may have a non-uniform composition or be at a non-uniform agglomeration state. In this case, the solid residue may be subjected to mixing and crushing to give more uniform and finer powders to be used in the step 3, whereby a catalyst can be obtained which has more uniform particle diameter.

For the mixing and crushing of the solid residue, for example, a roll-rotating mill, a ball mill, a small-diameter ball mill (bead mill), a medium-stirring mill, an air flow crusher, a mortar, an automatic kneading mortar, a crushing tank, or a jet mill is employable; when the solid residue has been provided in a small amount, a mortar, an automatic kneading mortar, or a batch-type ball mill is preferably used; and when the solid residue has been provided in a large amount and is to be subjected to continuous mixing or crushing treatment, a jet mill is preferably used.

(Step 3)

In the step 3, the solid residue obtained in the step 2 is heat-treated to give an oxygen reduction catalyst. In accordance with the present invention, the resultant oxygen reduction catalyst is the catalyst (A).

The temperature in this heat treatment is 900°C to 1400°C, preferably 1100°C to 1400°C, more preferably 1150°C to 1400°C.

When the resultant oxygen reduction catalyst is used as a fuel cell electrode catalyst, higher temperature in the heat treatment tends to make the fuel cell electrode catalyst have better durability. However, if the temperature in the heat treatment is excessively higher than the above range, sintering and grain growth occur between particles of the resultant oxygen reduction catalyst, an oxygen atom that constitutes the catalyst may lack, and the cell voltage of a fuel cell may be decreased by using it as the fuel cell electrode catalyst. On the other hand, if the temperature in the heat treatment is excessively lower than the above range, it is difficult to obtain the oxygen reduction catalyst having high activity.

Examples of methods of the heat treatment method include a standing method, a stirring method, a dropping method, and a powder capturing method.

The standing method is a method in which the solid residue obtained in the step 2 is placed in a stationary electric furnace or the like and is heated. During the heating, the solid residue that has been weighed may also be put in a ceramic container such as an alumina board or a quartz board. The standing method is preferable in view of being able to heat a large amount of the solid residue.

The stirring method is a method in which the solid residue is put in an electric furnace such as a rotary kiln and is heated while being stirred. The stirring method is preferable in view of being able to heat a large amount of the solid residue and in view of being able to prevent the aggregation and growth of the particles of the resultant oxygen reduction catalyst. Furthermore, the stirring method is preferable in view of being able to continuously produce the oxygen reduction catalyst by sloping a furnace.

The dropping method is a method in which an induction furnace is heated to a predetermined heating temperature while an atmosphere gas is flowing through the furnace, a thermal equilibrium is maintained at the temperature, and thereafter the solid residue is dropped and heated in a crucible which is a heating zone in the furnace. The dropping method is preferable in view of being able to minimizing the aggregation and growth of the particles of the resultant oxygen reduction catalyst.

The powder capturing method is a method by which the solid residue is allowed to suspend as particles in a non-oxidizing gas atmosphere and the solid residue is captured and heated in a vertical tubular furnace kept at a predetermined heating temperature.

When the heat treatment is performed by the standing method, a rate of temperature increase, although not particularly limited, is preferably around 1°C/min to 100°C/min, more preferably 5°C/min to 50°C/min. Further, the heating time is preferably 0.1 to 10 hours, more preferably 0.5 to 5 hours, further preferably 0.5 to 3 hours. When the heating by the standing method is performed in an infrared furnace such as an infrared gold image furnace or a tubular furnace, the heating time of oxygen reduction catalyst particles is 0.1 to 10 hours, preferably 0.5 hour to 5 hours. The heating time in this range leads to the tendency of the formation of uniform oxygen reduction catalyst particles.

Under the stirring method, the heating time of the solid residue is usually 10 minutes to 5 hours, preferably 30 minutes to 2 hours. Under this method, when the solid residue is continuously heated, for example, by sloping the furnace, the heating time is defined as a mean residence time calculated from the sample flowing amount in a steady furnace.

Under the dropping method, the heating time of the solid residue is usually 0.5 to 10 minutes, preferably 0.5 to 3 minutes. The heating time within this range leads to the tendency of the formation of uniform oxygen reduction catalyst particles.

Under the powder capturing method, the heating time of the solid residue is 0.2 second to 1 minute, preferably 0.2 to 10 seconds. The heating time within this range leads to the tendency of the formation of uniform oxygen reduction catalyst particles.

When the heat treatment is performed under the standing method, a heating furnace employing LNG (liquefied natural gas), LPG (liquefied petroleum gas), light oil, heavy oil, electricity, or the like as a heat source may be used as a heat treatment apparatus. In this case, since the atmosphere in heat treatment of the solid residue is important in the present invention, a preferable apparatus is not a heating apparatus that holds fuel flame within the furnace and thereby provides heating from the inside of the furnace, but a heating apparatus that provides heating from the outside of the furnace.

When a heating furnace is used which provides the solid residue in an amount of 50 kg or more per one batch, from the viewpoint of a cost, a heating furnace employing LNG or LPG as a heat source is preferable.

When an oxygen reduction catalyst having particularly high catalytic activity is desired, it is preferable to use an electric furnace employing electricity as a heat source, which allows for the strict controlling of temperature.

Exemplary shapes of the furnace include an infrared furnace such as an infrared gold image furnace, a tubular furnace, a top-loading furnace, a tunnel furnace, a box furnace, a sample table elevating-type furnace (elevator furnace), a car-bottom furnace, and the like; of these, preferred are an infrared furnace, a tubular furnace, a top-loading furnace, a box furnace, and a sample table elevating-type furnace, which allow for the particular strict controlling of atmosphere; and preferred are an infrared furnace and a tubular furnace.

When the stirring method is adopted, the above heat source is also employable; however, especially when the solid residue is continuously heat-treated by the stirring method using a inclined rotary kiln, the size of the equipment tends to be large and a large amount of energy tends to be needed; and thus it is preferable to use a heat source derived from fuels such as LPG.

The atmosphere in performing the heat treatment is preferably a non-oxidizing atmosphere, which allows the resultant oxygen reduction catalyst to have increased activity. In this sense, the main component thereof is preferably a non-oxidizing gas atmosphere. Among the non-oxidizing gases, in view of relative inexpensiveness and easy availability, nitrogen, argon, and helium are preferred; nitrogen and argon are more preferred; and nitrogen is further preferred. These non-oxidizing gases may be used singly or in combination of two or more kinds.

The presence of a non-oxidizing gas such as nitrogen in the atmosphere in performing the heat treatment may allow the resultant oxygen reduction catalyst to have higher catalytic performance. In addition, nitrogen may react with the solid residue in the heat treatment.

For example, when the heat treatment is performed under the atmosphere of a nitrogen gas; an argon gas; a mixed gas of a nitrogen gas and an argon gas; or a mixed gas of one or more gases selected from a nitrogen gas and an argon gas and one or more gases selected from a hydrogen gas and an ammonia gas, an oxygen reduction catalyst having high catalytic performance tends to be obtained. Therefore, in the present invention, a non-oxidizing gas atmosphere containing a hydrogen gas is preferably used as the atmosphere in performing the heat treatment. As such a non-oxidizing gas atmosphere containing a hydrogen gas, the atmosphere of a mixed gas of a nitrogen gas and a hydrogen gas or the atmosphere of a mixed gas of an argon gas and a hydrogen gas is preferred.

When the atmosphere in performing the heat treatment contains a hydrogen gas, the concentration of the hydrogen gas is, for example, 100% by volume or less, preferably 1% by volume or more and 20% by volume or less, more preferably 1 to 5% by volume.

A heat-treated product obtained by the heat treatment may be used as the oxygen reduction catalyst as it is or may be further disintegrated and then used as the oxygen reduction catalyst. In the present specification, an operation of making a heat-treated product fine, such as disintegrating or crushing, is denoted as "disintegrating" without particular distinction. Performing the disintegrating may improve the processability in using the resultant oxygen reduction catalyst to produce an electrode, and the properties of the resultant electrode. For the disintegrating, for example, a roll-rotating mill, a ball mill, a small-diameter ball mill (bead mill), a medium-stirring mill, an air flow crusher, a mortar, an automatic kneading mortar, a crushing tank, or a jet mill may be used. When the oxygen reduction catalyst has been provided in a small amount, a mortar, an automatic kneading mortar, or a batch-type ball mill is preferred; and when the heat-treated product is to be continuously treated in a large amount, a jet mill or a continuous-type ball mill is preferred, and among the continuous-type ball mills, a bead mill is further preferred. This crushing may be performed in a wet process in the presence of an appropriate dispersion medium or may be performed in a dry process under the situation of the absence of a dispersion medium.

<BET Specific Surface Area>

According to the method for producing an oxygen reduction catalyst of the present invention, an oxygen reduction catalyst having a large specific surface area is produced, and the specific surface area as calculated by BET method of the catalyst (A) of the present invention is preferably 30 $m^2$/g or more, more preferably 50 to 600 $m^2$/g, further preferably 100 to 600 $m^2$/g, particularly preferably 200 to 600 $m^2$/g.

[Uses]

The oxygen reducing catalyst of the present invention, i.e., the catalyst (A) is not particularly limited in use but can be preferably used in a fuel cell electrode catalyst, an air cell electrode catalyst, or the like.
The catalyst (A) of the present invention can be used as a catalyst alternative to a platinum catalyst.

(Fuel Cell Catalyst Layer)

The fuel cell catalyst layer of the present invention includes the catalyst (A).
Fuel cell catalyst layers include anode catalyst layers and cathode catalyst layers, and the catalyst (A) may be used in any one of these layers. Because the catalyst (A) has excellent durability and high oxygen reducing ability, it is preferably used in cathode catalyst layers.
The fuel cell catalyst layer of the present invention preferably further includes an electron conductive powder. When the fuel cell catalyst layer including the catalyst (A) further includes the electron conductive powder, the reduction current can be more increased. It is assumed that the electron conductive powder increases the reduction current because it allows the catalyst (A) to have an electrical bond for inducing electrochemical reaction.
The electron conductive particles are usually used as a carrier of the catalyst.
Although the catalyst (A) has conductivity to some degree, in order for the catalyst (A) to be given more electrons or in order for a reactant to receive many electrons from the catalyst (A), the catalyst (A), in order to be provided with conductivity, may be mixed with carrier particles. The carrier particles may be mixed into the catalyst (A) produced after subjected to the step 1 to the step 3, or may be mixed in any stage of from the step 1 to the step 3.
Examples of materials of the electron conductive particles include carbon, conductive polymers, conductive ceramics, metals, and conductive inorganic oxides such as tungsten oxide and iridium oxide, and these materials can be used singly or in combination with one another. In particular, carbon or a mixture of carbon and other electron conductive particles is preferred, since the electron conductive particles composed of carbon have a large specific surface area, those having a small particle diameter are easily available inexpensively, and they are excellent in chemical resistance and high-potential resistance. That is, the fuel cell catalyst layer preferably includes the catalyst (A) and carbon.
Examples of the carbon include carbon black, graphite, activated carbon, carbon nanotube, carbon nanofiber, carbon nanohorn, fullerene, porous carbon, graphene, and the like. If the particle diameter of the electron conductive particles composed of carbon is excessively small, an electron conductive path is not readily formed, while if the particle diameter is excessively large, the fuel cell catalyst layer tends to have decreased gas diffusion properties or the catalyst usage rate tends to be lowered, and, therefore, the particle diameter of the electron conductive particles composed of carbon is preferably 10 to 1000 nm, more preferably 10 to 100 nm.
When the electron conductive particles are composed of carbon, the mass ratio of the catalyst (A) to the electron conductive particles (catalyst: electron conductive particles) is preferably 4:1 to 1000:1.
The conductive polymers are not particularly limited but examples thereof include polyacetylene, poly-p-phenylene, polyaniline, polyalkylaniline, polypyrrole, polythiophene, polyindole, poly-1,5-diaminoanthraquinone, polyaminodiphenyl, poly(o-phenylenediamine), poly(quinolinium) salt, polypyridine, polyquinoxaline, polyphenylquinoxaline, and the like. Of these, polypyrrole, polyaniline, and polythiophene are preferred, and polypyrrole is more preferred.
The fuel cell electrode catalyst layer preferably further includes a polymer electrolyte. The polymer electrolytes are not particularly limited as long as being those commonly used in fuel cell catalyst layers. Specific examples thereof include perfluorocarbon polymers having a sulfonic acid group (such as NAFION (registered trademark)), hydrocarbon polymer compounds having a sulfonic acid group, polymer compounds doped with inorganic acids such as phosphoric acid, organic/inorganic hybrid polymers partially substituted with proton conductive functional groups, and proton conductors composed of a polymer matrix impregnated with a phosphoric acid solution or a sulfuric acid solution. Of these, NAFION (registered trademark) is preferable. Examples of the source of NAFION (registered trademark) in forming the fuel cell catalyst layer include a 5% NAFION (registered trademark) solution (DE521, DuPont) and the like.
The fuel cell catalyst layer of the present invention may be used as an anode catalyst layer or a cathode catalyst layer. The fuel cell catalyst layer of the present invention includes the catalyst that has high oxygen reducing ability and is resistant to corrosion in acidic electrolytes even at high potential and is therefore useful as a catalyst layer provided in a cathode of a fuel cell (as a cathode catalyst layer). In particular, the catalyst layer is preferably provided in a cathode of a membrane electrode assembly in a polymer electrolyte fuel cell.

The catalyst (A) may be dispersed on the electron conductive particles serving as a carrier by methods such as airborne dispersion methods and in-liquid dispersion methods. The in-liquid dispersion methods are preferable because a dispersion of the catalyst (A) and the electron conductive particles in a solvent can be used in the step for forming a fuel cell catalyst layer. Examples of the in-liquid dispersion methods include a method using orifice-choked flow, a method using rotational shear flow, a method using ultrasound, and the like. The solvents used in the in-liquid dispersion methods are not particularly limited as long as the catalysts or the electron conductive particles are not corroded and are dispersed therein. Volatile liquid organic solvents, water or the like are generally used.

When the catalyst (A) is dispersed on the electron conductive particles, the electrolyte described above and a dispersant may be further dispersed together.

The fuel cell catalyst layer may be formed by any methods without limitation. For example, a suspension containing the catalyst (A), the electron conductive particles, and the electrolyte may be applied to an electrolyte membrane or a gas diffusion layer as described later. The application methods include dipping, screen printing, roll coating, spraying, bar coater application, and the like. In another embodiment, a suspension containing the catalyst (A), the electron conductive particles, and the electrolyte may be applied or filtered on a substrate to form a fuel cell catalyst layer, and the catalyst layer may be transferred to an electrolyte membrane.

In one preferred embodiment of the present invention, the fuel cell catalyst layer can be formed by a bar coater application method. For example, a suspension containing the catalyst (A), the electron conductive particles, and an electrolyte is obtained by mixing the catalyst (A) and the electron conductive particles in an electrolyte solution, and this suspension is then applied to the surface of a gas diffusion layer, which has been subjected to surface treatment with polytetrafluoroethylene beforehand, by the bar coater application, whereby an electrode having the fuel cell catalyst layer on the surface of the gas diffusion layer is obtained. Such an electrode can be used as, e.g., a cathode electrode, and in this case, the fuel cell catalyst layer is a cathode catalyst layer.

A suspension containing an electrode catalyst, such as the above suspension containing the catalyst (A), more specifically, a suspension containing an electrode catalyst, electron conductive particles, and an electrolyte may also be often referred to as an "ink".

(Electrode)

The electrode of the present invention includes the fuel cell catalyst layer and a porous support layer.

The electrode of the present invention may be used as any electrode of a cathode or an anode. The electrode of the present invention is composed of the catalyst (A) as an oxygen reduction catalyst and has excellent durability and high catalytic performance, and therefore using the electrode as a cathode leads to higher industrial advantage.

The porous support layer is a layer which diffuses gas (hereinafter also referred to as a "gas diffusion layer"). The gas diffusion layer is not limited as long as having electron conductivity, high gas diffusion properties, and high corrosion resistance. Carbon-based porous materials such as carbon paper and carbon cloth and, for weight reduction, stainless steel and anticorrosive-coated aluminum foils are generally used as the gas diffusion layer.

(Membrane Electrode Assembly)

The membrane electrode assembly of the present invention includes a cathode, an anode, and an electrolyte membrane interposed between the cathode and the anode, wherein the cathode is the electrode. In this case, a fuel cell electrode known in the art, e.g., a fuel cell electrode containing a platinum-based catalyst such as platinum-supported carbon instead of the catalyst (A) can be used as the anode.

Hereinafter, in the present specification, the membrane electrode assembly may be referred to as "MEA".

As the electrolyte membranes, perfluorosulfonic acid-based electrolyte membranes or hydrocarbon electrolyte membranes are generally used, and there may also be used membranes in which polymer microporous membranes are impregnated with liquid electrolyte; membranes in which porous bodies are filled with polymer electrolyte; or the like.

The membrane electrode assembly of the present invention can be obtained by forming the fuel cell catalyst layer on the electrolyte membrane and/or the gas diffusion layer, thereafter sandwiching both surfaces of the electrolyte membrane between gas diffusion layers so that a cathode catalyst layer and an anode catalyst layer are internal sides, and hot-pressing the resultant.

Temperature in the hot press, which is appropriately selected depending on a component in the used electrolyte membrane and/or catalyst layer, is preferably 100 to 160°C, more preferably 120 to 160°C, and further preferably 130 to 150°C. The temperature in the hot press of less than the lower limit may lead to insufficient junction, while the temperature of more than the upper limit may lead to the deterioration of the component in the electrolyte membrane and/or the catalyst layer.

Pressure in the hot press, which is appropriately selected depending on the component in the electrolyte membrane and/or the catalyst layer and the kind of the gas diffusion layer, is preferably 1 to 100 MPa, more preferably 2 to 50 MPa, further preferably 3 to 25 MPa. The pressure in the hot press of less than the lower limit may lead to insufficient junction, while the pressure of more than the upper limit may lead to the decreased void degree of the catalyst layer or the gas diffusion layer to deteriorate performance.

Time in the hot press, which is appropriately selected depending on the temperature and the pressure in the hot press, is preferably 1 to 20 minutes, more preferably 3 to 15 minutes, further preferably 5 to 10 minutes.

<Evaluation of Catalytic Performance and Catalytic Durability in Membrane Electrode Assembly>

The catalytic performance and catalytic durability in the membrane electrode assembly can be evaluated, for example, by a catalytic performance evaluation method and a catalytic durability evaluation method conducted according to the following procedures.

(1) Production of Single Cell

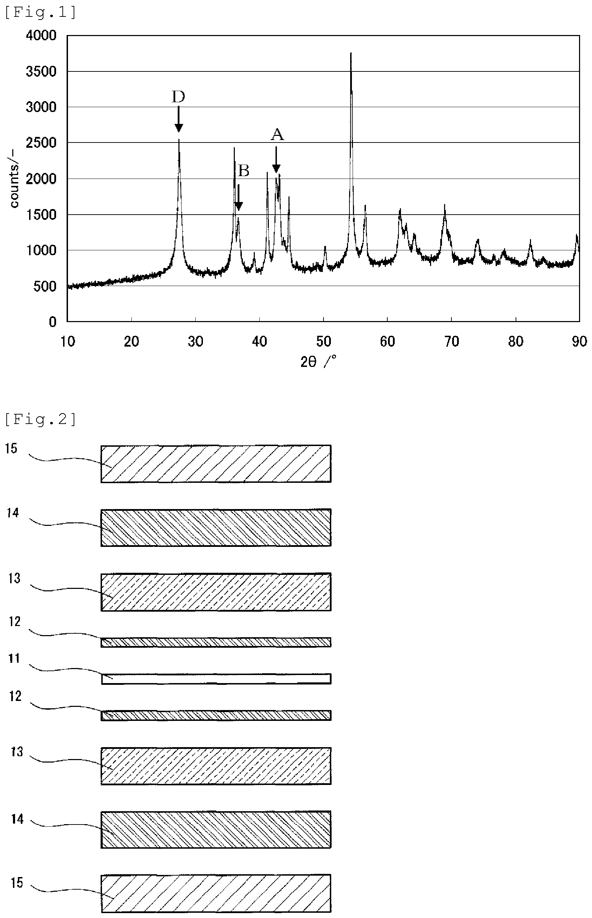

First, a single cell of a polymer electrolyte fuel cell is prepared using the membrane electrode assembly. For example, as illustrated in Fig. 2, the membrane electrode assembly 11 is held by sealing materials (gaskets 12), separators each having a gas flow passage 13, and collectors 14 and fixed with a bolt, and secured so that the pressure of contacted surface would be a prescribed value (4 N), to thereby prepare the single cell of the polymer electrolyte fuel cell.

(2) Current Source Load Measurement Test

A current source load measurement test of the single cell obtained in the above (1) is conducted to observe a variation in cell voltage with time. As test conditions, without particular limitation, for example, there can be used conditions that, to the anode side, hydrogen is supplied as a fuel at a flow rate of 0.1 L/min, and to the cathode side, oxygen is supplied as an oxidizing agent at a flow rate of 0.1 L/min, and, while applying a back pressure of 300 kPa to both sides, a current source load is 0.1 A/cm$^2$ in the state of an anode humidifier being at 80°C, a cathode humidifier being at 80°C, and the temperature of the single cell being 80°C.

(3) Method for Evaluation of Catalytic Performance and Catalytic Durability

The catalytic performance and the catalytic durability in the fuel cell can be evaluated based on a variation curve of a voltage with time, obtained in the current source load measurement test in the above (2).

In fuel cells including a fuel cell in which the membrane electrode assembly of the present invention is used, there is a tendency to start a stage (stage a) in which a rapid voltage fluctuation temporarily occurs after starting a continuous operation, to then, in some cases, undergo a transition stage (stage b) in which the voltage fluctuation is reduced, and to further shift to a stage (stage c) in which the voltage fluctuation is constant in the state of being low, and in many cases, this voltage fluctuation is observed in the form of a voltage drop. Such a phenomenon is presumed to be caused by the influence of aging or membrane fitting. After shifting to the stage c following a lapse of predetermined time from the start of the continuous operation, for example, after a lapse of 20 hours from the start of the continuous operation, the influence of aging or membrane fitting in the membrane electrode assembly is assumed to be reduced to allow for more accurate evaluation of the original performance of the membrane electrode assembly.

Accordingly, the catalytic performance is evaluated based on a voltage after shifting to the stage c, for example, a voltage after 20 hours of the continuous operation. However, when the 20 hour operation does not result in the stage c, a cell voltage for 40th hour is evaluated.

The cell voltage of the membrane electrode assembly after shifting to the stage c is preferably 0.1 V or more, more preferably 0.15 V or more, further preferably 0.2 V or more.

The catalytic durability can be evaluated based on the average slope of portions with comparatively small variations in cell voltage with time, in portions other than portions of the stage in which an initial rapid voltage fluctuation occurs (i.e., the stage a) and the subsequent transition stage in which the voltage fluctuation is sharply reduced (i.e., the stage b). Specifically, this "average slope" can be obtained as the slope of a straight line obtained by choosing portions with comparatively small variations in cell voltage with time in portions after shifting to the stage c and by subjecting the plots of cell voltages in the chosen portions to straight-line approximation by an appropriate technique such as a least square method. In the present specification, this "average slope" is represented by a slope ΔmV/h indicating a voltage variation per hour and, as the signs thereof, the directions of increasing and decreasing a voltage are defined as a positive and a negative, respectively. In the present specification, hereinafter, this slope indicating the voltage variation per hour is referred to as a "voltage drop slope" since a voltage fluctuation in the above stage c is observed in the form of a voltage reduction (i.e., a negative value of $\Delta$mV/h) in many cases in the present invention.

In the present invention, the lower degree of the voltage reduction in the above stage c, i.e., a higher value of "voltage drop slope" $\Delta$mV/h shows the higher durability of a catalyst constituting the membrane electrode assembly. Accordingly, the value of "voltage drop slope" is preferably higher than -2 mV/h, more preferably higher than -1 mV/h, further preferably higher than -0.5 mV/h.

The value of "voltage drop slope" may be a positive value, which shows high durability.

Evaluation of the slope of the voltage after the voltage fluctuation is constant in the state of being low (i.e., after shifting to the stage c) is assumed to be able to lead to reduction in the influence of aging or membrane fitting in the membrane electrode assembly, whereby the original performance of the membrane electrode assembly can be more accurately evaluated.

<Uses of Membrane Electrode Assembly>

The membrane electrode assembly of the present invention has high catalytic performance and catalytic durability and can be therefore preferably used in uses of fuel cells or air cells.

The electrode reaction in fuel cells takes place at a so-called three-phase interface (electrolyte-electrode catalyst-reactant gas). The fuel cells are classified according to the electrolytes used, into several types such as molten carbonate type (MCFC), phosphoric acid type (PAFC), solid oxide type (SOFC), polymer electrolyte type (PEFC), and the like. Especially, the membrane electrode assembly of the present invention is preferably used in polymer electrolyte fuel cells and methanol may also be used as a fuel.

(Fuel Cell)

The fuel cell of the present invention includes the membrane electrode assembly.

The fuel cell produced from the catalyst (A) of the present invention has high performance and particularly has high durability. Further, the fuel cell produced from the catalyst (A) of the present invention is considerably inexpensive as compared with that produced from platinum catalysts. The fuel cell of the present invention has at least one function selected from the group consisting of electricity generating function, light emitting function, heat generating function, sound generating function, movement function, display function, and charging function and can improve the performance of an article, particularly a mobile article, having a fuel cell. The fuel cell is held preferably on the surface or inside of the article.

<Specific Examples of Articles Including Fuel Cell of the Present Invention>

Specific examples of the articles including the fuel cell of the present invention include architectural structures such as buildings, houses and tents, illumination equipment such as fluorescent light, LED, organic EL, street light, interior illumination and traffic light, machinery, automotive devices including vehicles, household appliances, agricultural equipment, electronic devices, mobile information terminals including mobile phones, beauty instruments, portable tools, sanitary goods such as bathroom goods and lavatory goods, furniture, toys, ornaments, bulletin boards, cool boxes, outdoor goods such as exterior generators, teaching materials, artificial flowers, items of artwork, power source for cardiac pacemakers and power source for heating and cooling apparatuses equipped with Peltier elements.

Examples

The present invention will be described below more specifically based on examples.

In Examples and Comparative Examples, various measurements were performed by the following methods.

[Analytical Methods]

1. Powder X-ray Diffractometry (XRD)

Samples were subjected to powder X-ray diffractometry using ROTAFLEX manufactured by Rigaku Corporation.

The details of the measurement conditions are as follows.

X-ray output: (Cu-K$\alpha$): 50 kV, 180 mA

Scanning axis: θ/2θ
Measurement range (2θ): 5.00° to 89.98°
Measurement mode: FT
Reading width: 0.02°
Sampling time: 0.70 sec
DS, SS, RS: 0.5°, 0.5°, 0.15 mm
Goniometer radius: 185 mm

The number of diffraction peaks in the powder X-ray diffractometry for each sample was counted on the assumption that a peak of a signal that was detected with a signal (S) to noise (N) ratio (S/N) of 2 or more was a single peak.
The borderline of the noise (N) was determined by the amplitude of the baseline.

2. Elemental Analysis

<Carbon, Sulfur>

About 0.01 g of a sample was weighed and measured with a carbon/sulfur analyzer (EMIA-920V manufactured by HORIBA, Ltd.).

<Nitrogen, Oxygen>

About 0.01 g of a sample was weighed, was sealed in a Ni capsule, and was measured with an oxygen/nitrogen analyzer (TC600 manufactured by LECO).

<Metals (Titanium, Iron)>

About 0.1 g of a sample was weighed in a quartz beaker and was completely decomposed by heating, using sulfuric acid, nitric acid, and fluorinated acid. After cooling, this resultant solution was quantitatively determine to 100 ml, was further appropriately diluted, and was quantitated using ICP-OES (VISTA-PRO manufactured by SII) or ICP-MS (HP7500 manufactured by Agilent).

<Fluorine>

Several mg of a sample was decomposed by combustion while water vapor was flowing under oxygen gas air stream. A generated gas was made to be absorbed by 10 mM $Na_2CO_3$ (containing hydrogen peroxide; standard for correction Br-: 5 ppm) to measure the amount of fluorine by ion chromatography.
Combustion Decomposition Conditions:

Sample combustion apparatus: AQF-100 (manufactured by Mitsubishi Chemical Analytech Co., Ltd.)
Combustion tube temperature: 950°C (temperature-programmed decomposition by moving sample board)

Ion chromatography measurement conditions

Measuring apparatus: DIONEX DX-500
Eluent: 1.8 mM $Na_2CO_3$ + 1.7 mM $NaHCO_3$
Column (temperature) : ShodexSI-90 (room temperature)
Flow rate: 1.0 ml/min
Injection amount: 25 μl
Detector: Electric conductivity detector
Suppressor: DIONEX ASRS-300

3. BET Specific Surface Area Measurement

The specific surface area of 0.15 g of a collected sample was measured by a fully-automated BET specific surface area measuring apparatus MACSORB (manufactured by Mountech Co., Ltd.). The pretreatment time and the pretreatment temperature were set at 30 minutes and 200°C, respectively.

4. Catalytic Performance Evaluation Method and Catalytic Durability Evaluation Method

The catalytic performance and catalytic durability of a membrane electrode assembly obtained in each of examples and comparative examples were evaluated as described below.

First, variations in voltage with time were plotted from cell voltage data acquired every 30 seconds in a current source load measurement test conducted for a single cell of a polymer electrolyte fuel cell produced using a membrane electrode assembly, to thereby make a curve of variation in voltage with time. Based on this curve of variation in voltage with time, there were grasped: a stage (stage a) in which a rapid voltage fluctuation temporarily occurs after starting a continuous operation; a transition stage (stage b), in which the voltage fluctuation is reduced, after the stage a; and a stage (stage c), in which the voltage fluctuation is constant in the state of being low, after the stage b.

The evaluation of the catalytic performance was performed by evaluating a value of a cell voltage at the time of 20 hours after starting the operation, which time was after shifting to the stage c. However, when the 20 hour operation does not result in the stage c, a cell voltage for 40th hour was evaluated.

Further, the evaluation of the catalytic durability was performed by

choosing portions with comparatively small variations in cell voltage with time in portions after shifting to the stage c in each of examples and comparative examples,

subjecting the plots of cell voltages in the chosen portions to straight-line approximation by a least square method, determining the slope of the resultant approximation straight line as the average slope of a voltage drop in the chosen portions, and

evaluating the value of the slope, regarded as the "voltage drop slope" of the membrane electrode assembly.

[Anode Preparation Example 1]

1. Preparation of Anode Ink

Into 50 mL of pure water, 0.6 g of platinum supporting carbon (TEC10E60E, manufactured by TANAKA KIKINZOKU KOGYO K.K.) and 5 g of an aqueous solution containing 0.25 g of a proton conductive material (NAFION (registered trademark)) (5% aqueous NAFION (registered trademark) solution, manufactured by Wako Pure Chemical Industries, Ltd.) were introduced, and the resultant solution was mixed with an ultrasonic wave dispersion machine (UT-106H, manufactured by Sharp Manufacturing Systems Corporation) for 1 hour, to prepare an anode ink (1).

2. Preparation of Electrode Having Anode Catalyst Layer

A gas diffusion layer (carbon paper (TGP-H-060, manufactured by Toray Industries, Inc.)) was immersed in acetone for 30 seconds and degreased, thereafter dried, and then immersed in an aqueous 10% polytetrafluoroethylene (hereinafter also referred to as "PTFE") solution for 30 seconds.

The immersed product was dried at room temperature and was then heated at 350°C for 1 hour to give a water-repellent gas diffusion layer having PTFE dispersed in the carbon paper (hereinafter also referred to as "GDL").

The GDL was formed into the size of 5 cm $\times$ 5 cm, and the surface thereof was coated with the anode ink (1) using an automatic spray-coating apparatus (manufactured by San-Ei Tech Ltd.) at 80°C. By repeating the spray-coating, an electrode having an anode catalyst layer (1) in which the amount of platinum (Pt) per unit area was 1 mg/cm$^2$ was prepared.

[Example 1]

1. Preparation of Catalyst

A catalyst (1) was produced by using titanium tetraisopropoxide, glycine (hereinafter may be abbreviated as "Gly"), and iron(II) acetate as the titanium-containing compound (1a), the nitrogen-containing organic compound (2), and the second transition metal-containing compound (1b), respectively.

Specifically, 9.37 g (33.0 mmol) of titanium tetraisopropoxide (manufactured by Junsei Chemical Co., Ltd.) and 5.12 g (51.08 mmol) of acetylacetone (Junsei Chemical Co., Ltd.) were added to 32 mL of acetic acid (manufactured by Wako Pure Chemical Industries, Ltd.) to prepare a mixture solution containing titanium while being stirred at room temperature. Further, 10.0 g (133 mmol) of glycine (manufactured by Wako Pure Chemical Industries, Ltd.) and 0.582 g (3.35 mmol) of iron(II) acetate (manufactured by Aldrich Corporation) were added to 120 mL of pure water, and the resultant was stirred at room temperature and completely dissolved to prepare a mixture solution containing a nitrogen-containing organic compound. The mixture solution containing titanium was slowly added to the mixture solution containing a nitrogen-containing organic compound to give a transparent catalyst precursor solution.

A solvent was slowly evaporated in nitrogen atmosphere under reduced pressure using a rotatory evaporator while heating the catalyst precursor solution in water bath of which the temperature was set to about 60°C. A solid residue obtained by completely evaporating the solvent was finely and homogeneously crushed in a mortar to give 12.43 g of a powder.

This powder was put in an infrared gold image furnace (manufactured by ULVAC-RIKO Corporation), was subjected to vacuum nitrogen substitution twice with a mixed gas containing 4% by volume of a hydrogen gas and 96% by volume of a nitrogen gas, was heated to 950°C at 20°C/min while flowing the mixed gas at a flow rate of 125 mL/min, was maintained at 950°C for 15 minutes, and was naturally cooled after putting off a heater, to thereby obtain a powdery catalyst (hereinafter also expressed as "catalyst (1) ") . The temperature was measured by a thermocouple manufactured by ULVAC-RIKO Corporation, with which the bottom end of a sample holder was equipped. The BET specific surface area and composition determined by the elemental analysis, of this catalyst (1), are listed in Table 1.

2. XRD Measurement of Catalyst

After measuring the powder X-ray diffraction spectrum of the catalyst (1), peaks A, B, and D were observed as shown in Fig. 1. The intensity $I_A$ of the peak A at 42.65° was higher than the intensity $I_B$ of the peak B. Further, a ratio of $I_A$, the intensity $I_C$ of a peak based on an anatase structure, and the intensity $I_D$ of the peak D based on a rutile structure $(I_A/(I_A+I_C+I_D))$ was 0.40, and a cubic crystal was confirmed as a main product.

3. Production of Fuel Cell Membrane Electrode Assembly and Evaluation of Power Generation Properties Thereof

(1) Preparation of ink

There were added 0.2 g of the catalyst (1) prepared as described above and 0.05 g of carbon black (Ketjen black EC300J, manufactured by LION Corporation) as an electronically conductive material; 0.75 g of an aqueous solution containing 0.142 g of a proton conductive material (NAFION (registered trademark)) (20% aqueous NAFION (registered trademark) solution, manufactured by Wako Pure Chemical Industries, Ltd.) was further put; and the resultant was mixed with a planetary centrifugal mixer (THINKY MIXER, manufactured by THINKY Corporation) for 15 minutes to prepare a cathode ink (1).

(2) Production of Electrode Having Fuel Cell Catalyst Layer

A gas diffusion layer (carbon paper (TGP-H-060, manufactured by Toray Industries, Inc.) was immersed in acetone for 30 seconds and degreased, thereafter dried, and then immersed in an aqueous 10% PTFE solution for 30 seconds.

The immersed product was dried at room temperature, and was heated at 350°C for 1 hour, to give a water-repellent gas diffusion layer having PTFE dispersed in the carbon paper (hereinafter also referred to as "GDL").

The above GDL was formed into the size of 5 cm × 5 cm, and the surface thereof was applied with the above cathode ink (1) at 80°C by bar coater application to prepare an electrode having on the GDL surface a cathode catalyst layer (1), in which the total amount of the above catalyst (1) and the carbon black per unit area was 2.5 mg/cm$^2$ (hereinafter also referred to as "cathode (1)"). Further, the mass of the fuel cell catalyst (1) in the cathode catalyst layer (1) per unit area was 2.27 mg/cm$^2$.

(3) Production of Fuel Cell Membrane Electrode Assembly

As an electrolyte membrane, a cathode, and an anode, NAFION (registered trademark) membrane (NR-212, manufactured by DuPont), the cathode (1), and the electrode having the anode catalyst layer (1) on the GDL surface, prepared in Anode Preparation Example 1 (hereinafter also referred to as "anode (1)") were prepared, respectively.

A fuel cell membrane electrode assembly (hereinafter also referred to as "MEA") in which the electrolyte membrane was interposed between the cathode (1) and the anode (1) was prepared in such a manner as described below.

The electrolyte membrane was held by the cathode (1) and the anode (1); and these were thermally contact bonded with a hot pressing machine at a temperature of 140°C and at a pressure of 3 MPa for 6 minutes so that the cathode catalyst layer (1) and the anode catalyst layer (1) would adhere to the electrolyte membrane, to thereby prepare MEA (1).

(4) Preparation of Single Cell

As illustrated in Fig. 2, the MEA(1) prepared in the above 4 was held by two sealing materials (gaskets), two separators each having a gas flow passage, two collectors and two rubber heaters, and fixed and secured with a bolt such that the pressure of contacted surface would be a prescribed value (4 N), to thereby prepare a single cell (hereinafter also referred to as "single cell (1) ") (cell area: 5 cm$^2$) of a polymer electrolyte fuel cell.

(5) Evaluation of Power Generation Property (Measurement of Catalytic Performance)

The temperature of the single cell (1), the temperature of an anode humidifier, and the temperature of a cathode humidifier were set to 80°C, 80°C and 80°C, respectively. To the anode side, hydrogen was supplied as a fuel at a flow rate of 0.1 L/min, and to the cathode side, oxygen was supplied as an oxidizing agent at a flow rate of 0.1 L/min; and while applying a back pressure of 300 kPa to both sides, a current source load measurement test at 0.1 A/cm$^2$ was conducted in the single cell (1).

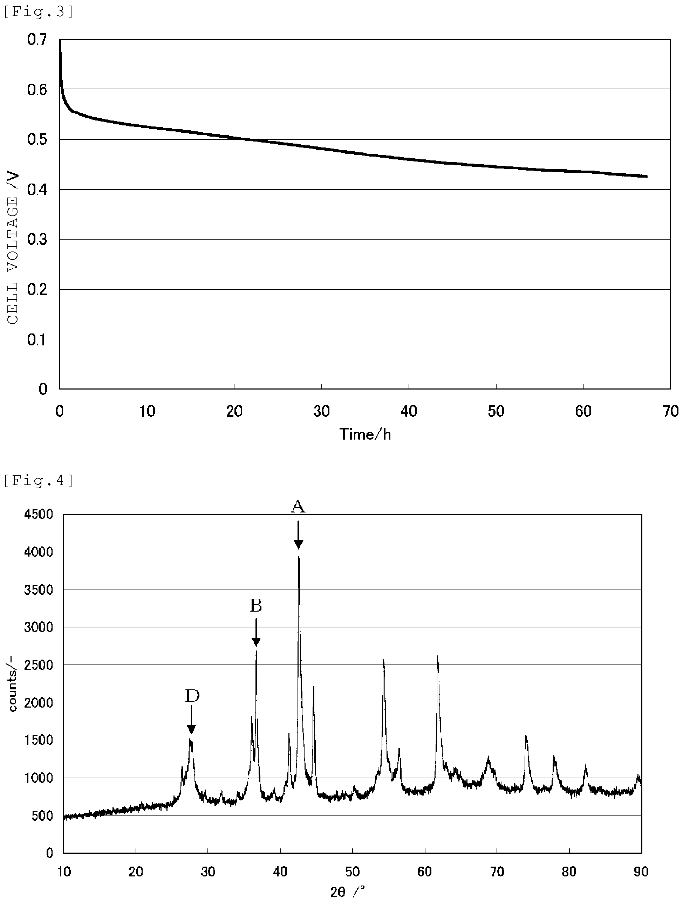

The measurement results indicating the variation in cell voltage with time in the single cell (1) are shown in Fig. 3.

After measurement by the catalytic durability evaluation method, no definite stage b was seen, and a period from 5th hour to the end of the measurement was regarded as a portion after shifting to the stage c. The average slope of the voltage drop was -1.8 mV/h, and the catalytic durability was confirmed to be high. After evaluation by the catalytic performance evaluation method, a cell voltage at the time of after 20 hours, which time was after shifting to the stage c, was 0.53 V, and the catalytic performance was confirmed to be high.

[Example 2]

1. Preparation of Catalyst

A catalyst (2) was synthesized by the same method as that of Example 1 except that burning temperature was 1050°C. The BET specific surface area and composition determined by the elemental analysis, of this catalyst, are listed in Table 1.

2. XRD Measurement of Catalyst

After measuring the powder X-ray diffraction spectrum of the catalyst (2), peaks A, B, and D were observed as shown in Fig. 4. The intensity $I_A$ of the peak A at 42.59° was higher than the intensity $I_B$ of the peak B. Further, a ratio of $I_A$, the intensity $I_C$ of a peak based on an anatase structure, and the intensity $I_D$ of the peak D based on a rutile structure ($I_A/ (I_A+I_C+I_D)$) was 0.77, and a cubic crystal was confirmed as a main product.

3. Production of Fuel Cell Membrane Electrode Assembly and Evaluation of Power Generation Properties Thereof

An electrode having on the GDL surface a cathode catalyst layer (2), in which the total amount of the catalyst (2) and the carbon black per unit area was 2.5 mg/cm$^2$ (hereinafter also referred to as a "cathode (2)") was prepared by the same method as that of Example 1 except that the catalyst (2) was used instead of the catalyst (1), a fuel cell membrane electrode assembly (hereinafter also referred to as "MEA (2)") was prepared by the same method as that of Example 1 except that the cathode (2) was used instead of the cathode (1), and a single cell of a polymer electrolyte fuel cell (hereinafter also referred to as a "single cell (2)") was prepared by the same method as that of Example 1 except that MEA (2) was used instead of MEA (1). The mass of the fuel cell catalyst (2) in the cathode catalyst layer (2) per unit area was 2.06 mg/cm$^2$.

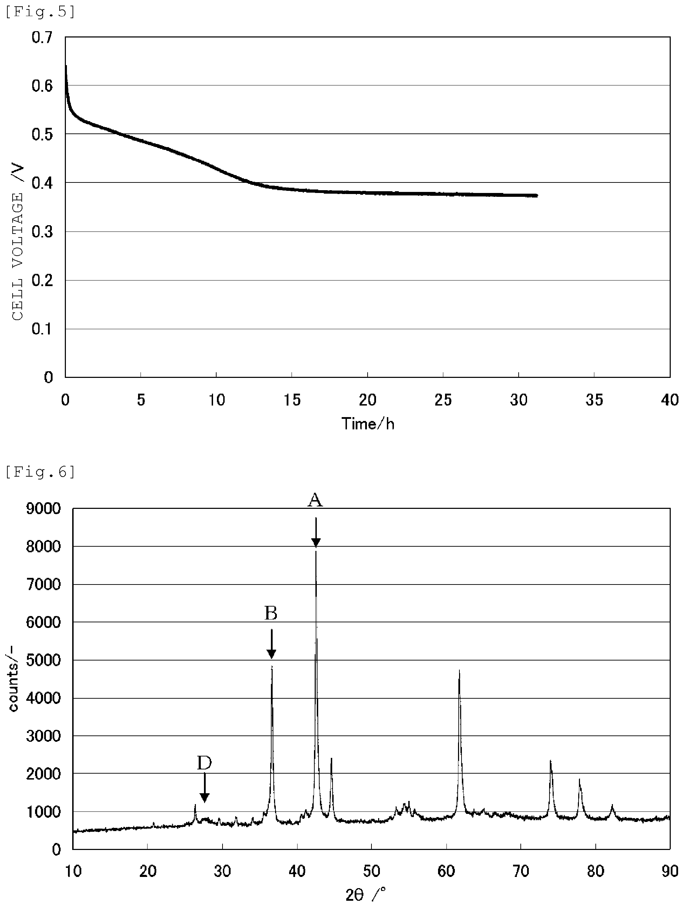

Further, the power generation properties of the single cell (2) were evaluated under the same conditions as those of Example 1. The measurement results indicating the variation in cell voltage with time in the single cell (2) are shown in Fig. 5.

After measurement by the catalytic durability evaluation method, the average slope of the voltage drop in a period from 34th hour to the end of the measurement, which period was a portion after shifting to the stage c, was -0.48 mV/h, and the catalyst durability was confirmed to be high. After evaluation by the catalytic performance evaluation method, a cell voltage at the time of after 40 hours, which time was after shifting to the stage c, was 0.40 V, and the catalytic performance was confirmed to be high.

[Example 3]

1. Preparation of Catalyst

A catalyst (3) was synthesized by the same method as that of Example 1 except that burning temperature was 1100°C. The BET specific surface area and composition determined by the elemental analysis, of this catalyst, are listed in Table 1.

2. XRD Measurement of Catalyst

After measuring the powder X-ray diffraction spectrum of the catalyst (3), peaks A, B, and D were observed as shown in Fig. 6. The intensity $I_A$ of the peak A at 42.21° was higher than the intensity $I_B$ of the peak B. Further, a ratio of $I_A$, the intensity $I_C$ of a peak based on an anatase structure, and the intensity $I_D$ of the peak D based on a rutile structure ($I_A/(I_A+I_C+I_D)$) was 0. 96, and a cubic crystal was confirmed as a main product.

3. Production of Fuel Cell Membrane Electrode Assembly and Evaluation of Power Generation Properties Thereof

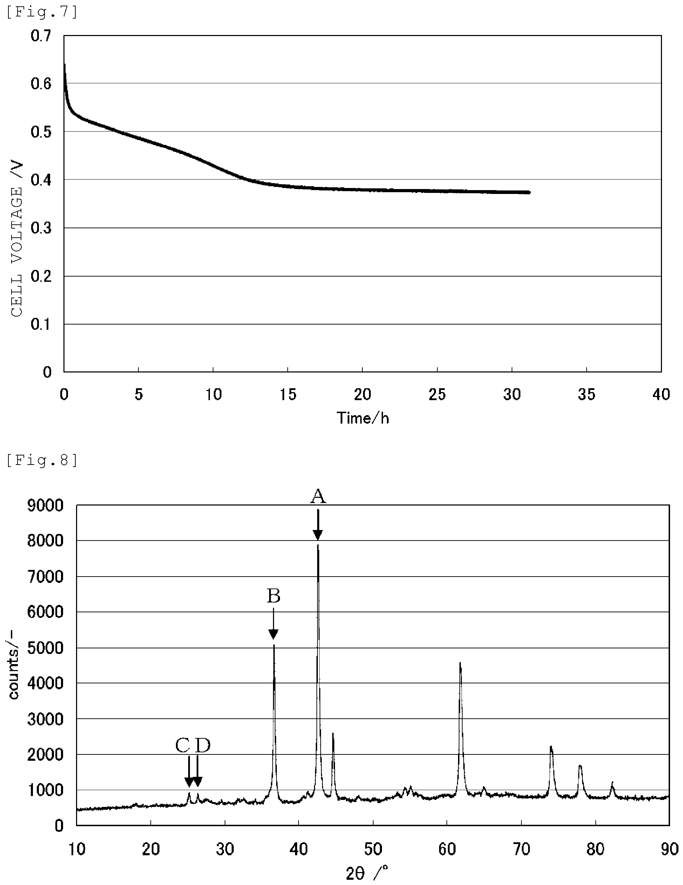

A single cell of a polymer electrolyte fuel cell (hereinafter also referred to as a "single cell (3) ") was prepared by the same method as that of Example 1 except that the catalyst (3) was used instead of the catalyst (1). The mass of the fuel cell catalyst (3) in the cathode catalyst layer (3) per unit area was 2.18 mg/cm$^2$.
Further, the power generation properties of the single cell (3) were evaluated under the same conditions as those of Example 1. The measurement results indicating the variation in cell voltage with time in the single cell (3) are shown in Fig. 7.
After measurement by the catalytic durability evaluation method, the average slope of the voltage drop in a period from 14th hour to the end of the measurement, which period was a portion after shifting to the stage c, was -0.48 mV/h, and the catalyst durability was confirmed to be high. After evaluation by the catalytic performance evaluation method, a cell voltage at the time of after 20 hours, which time was after shifting to the stage c, was 0.38 V, and the catalytic performance was confirmed to be high.

[Example 4]

1. Preparation of Catalyst

A catalyst (4) was synthesized by the same method as that of Example 1 except that burning temperature was 1150°C. The BET specific surface area and composition determined by the elemental analysis, of this catalyst, are listed in Table 1.

2. XRD Measurement of Catalyst

After measuring the powder X-ray diffraction spectrum of the catalyst (4), peaks A, B, C, and D were observed as shown in Fig. 8. The intensity $I_A$ of the peak A at 42.55° was higher than the intensity $I_B$ of the peak B. Further, a ratio of $I_A$, the intensity $I_C$ of the peak C based on an anatase structure, and the intensity $I_D$ of the peak D based on a rutile structure ($I_A/(I_A+I_C+I_D)$) was 0.91, and a cubic crystal was confirmed as a main product.

3. Production of Fuel Cell Membrane Electrode Assembly and Evaluation of Power Generation Properties Thereof

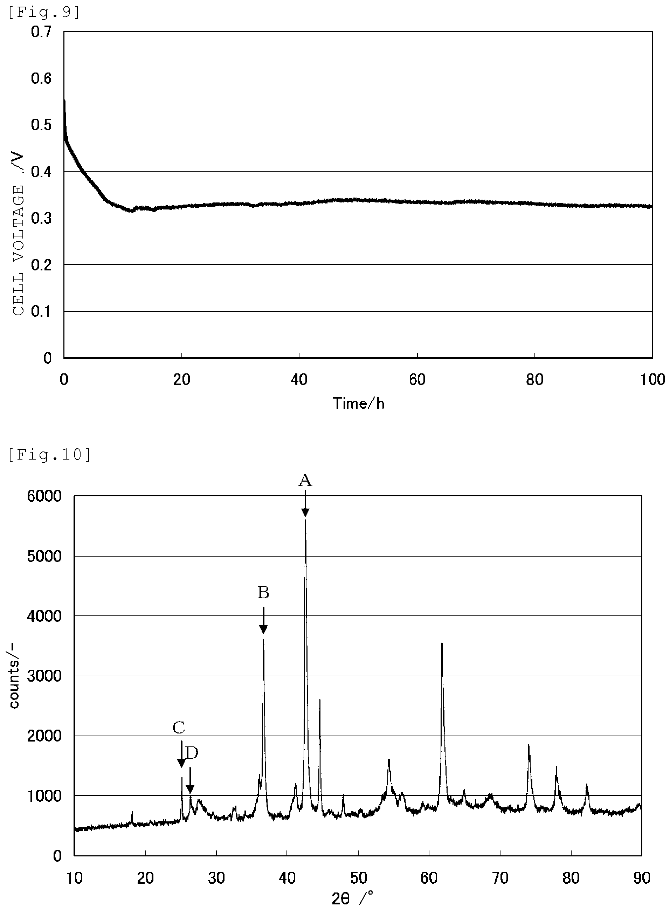

A single cell of a polymer electrolyte fuel cell (hereinafter also referred to as a "single cell (4) ") was prepared by the same method as that of Example 1 except that the catalyst (4) was used instead of the catalyst (1). The mass of the fuel cell catalyst (4) in the cathode catalyst layer (4) per unit area was 1.93 mg/cm$^2$.
Further, the power generation properties of the single cell (4) were evaluated under the same conditions as those of Example 1. The measurement results indicating the variation in cell voltage with time in the single cell (4) are shown in Fig. 9.
After measurement by the catalytic durability evaluation method, the average slope of the voltage drop in a period from 12th hour to the end of the measurement, which period was a portion after shifting to the stage c, was +0.02 mV/h, and the catalyst durability was confirmed to be high. After evaluation by the catalytic performance evaluation method, a cell voltage at the time of after 20 hours, which time was after shifting to the stage c, was 0.32 V, and the catalytic performance was confirmed to be high.

[Example 5]

1. Preparation of Catalyst

A catalyst (5) was synthesized by the same method as that of Example 1 except that burning temperature was 1200°C. The BET specific surface area and composition determined by the elemental analysis, of this catalyst, are listed in Table 1.

2. XRD Measurement of Catalyst

After measuring the powder X-ray diffraction spectrum of the catalyst (5), peaks A, B, C, and D were observed as shown in Fig. 10. The intensity $I_A$ of the peak A at 42.53° was higher than the intensity $I_B$ of the peak B. Further, a ratio of $I_A$, the intensity $I_C$ of the peak C based on an anatase structure, and the intensity $I_D$ of the peak D based on a rutile structure ($I_A/(I_A+I_C+I_D)$) was 0.80, and a cubic crystal was confirmed as a main product.

3. Production of Fuel Cell Membrane Electrode Assembly and Evaluation of Power Generation Properties Thereof

A single cell of a polymer electrolyte fuel cell (hereinafter also referred to as a "single cell (5) ") was prepared by the same method as that of Example 1 except that the catalyst (5) was used instead of the catalyst (1). The mass of the fuel cell catalyst (5) in the cathode catalyst layer (5) per unit area was 1.94 mg/cm$^2$.

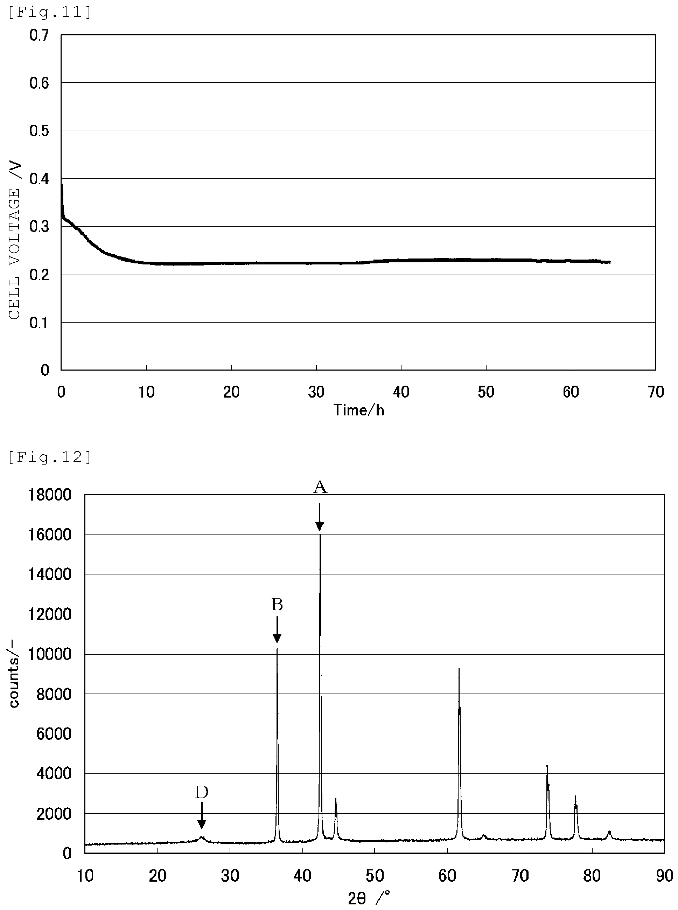

Further, the power generation properties of the single cell (5) were evaluated under the same conditions as those of Example 1. The measurement results indicating the variation in cell voltage with time in the single cell (5) are shown in Fig. 11.

After measurement by the catalytic durability evaluation method, the average slope of the voltage drop in a period from 13th hour to the end of the measurement, which period was a portion after shifting to the stage c, was +0.01 mV/h, and the catalyst durability was confirmed to be high. After evaluation by the catalytic performance evaluation method, a cell voltage at the time of after 20 hours, which time was after shifting to the stage c, was 0.22 V, and the catalytic performance was confirmed to be high.

[Example 6]

1. Preparation of Catalyst

A catalyst (6) was synthesized by the same method as that of Example 1 except that a tubular furnace (manufactured by Motoyama K. K.) was used to perform heating to 1400°C at 200°C/h, to perform maintenance at 1400°C for 2 hours, and to decrease the temperature at 200°C/h, while flowing a mixed gas containing 4% by volume of a hydrogen gas and 96% by volume of a nitrogen gas at a flow rate of 200 mL/min. The BET specific surface area and composition determined by the elemental analysis, of this catalyst, are listed in Table 1.

2. XRD Measurement of Catalyst

After measuring the powder X-ray diffraction spectrum of the catalyst (6), peaks A, B, and D were observed as shown in Fig. 12. The intensity $I_A$ of the peak A at 42.45° was higher than the intensity $I_B$ of the peak B. Further, a ratio of $I_A$, the intensity Ic of a peak based on an anatase structure, and the intensity $I_D$ of the peak D based on a rutile structure ($I_A/(I_A+I_C+I_D)$) was 0.99, and a cubic crystal was confirmed as a main product.

3. Production of Fuel Cell Membrane Electrode Assembly and Evaluation of Power Generation Properties Thereof

A single cell of a polymer electrolyte fuel cell (hereinafter also referred to as a "single cell (6) ") was prepared by the same method as that of Example 1 except that the catalyst (6) was used instead of the catalyst (1). The mass of the fuel cell catalyst (6) in the cathode catalyst layer (6) per unit area was 1.94 mg/cm$^2$.

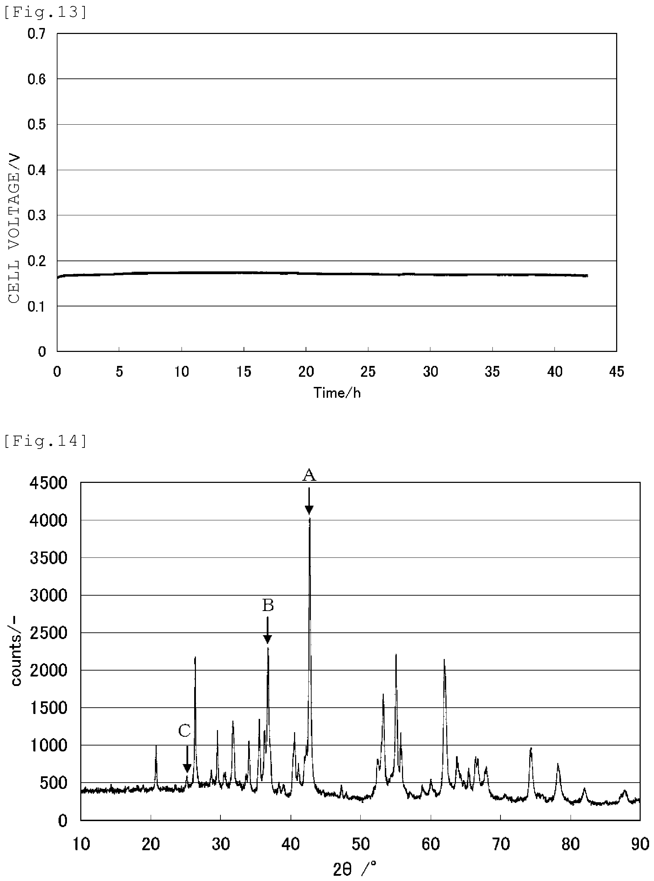

Further, the power generation properties of the single cell (6) were evaluated under the same conditions as those of Example 1. The measurement results indicating the variation in cell voltage with time in the single cell (6) are shown in Fig. 13.

After measurement by the catalytic durability evaluation method, the average slope of the voltage drop in a period from 10th hour to the end of the measurement, which period was a portion after shifting to the stage c, was -0.2 mV/h, and the catalyst durability was confirmed to be high. After evaluation by the catalytic performance evaluation method, a cell voltage at the time of after 20 hours, which time was after shifting to the stage c, was 0.18 V, and the catalytic performance was confirmed to be high.

[Example 7] (Reference only)

1. Preparation of Catalyst

A catalyst (7) was synthesized by the same method as that of Example 4 except that iron acetate was not added. The BET specific surface area and composition determined by the elemental analysis, of this catalyst, are listed in Table 1.

2. XRD Measurement of Catalyst

After measuring the powder X-ray diffraction spectrum of the catalyst (7), peaks A, B, and C were observed as shown in Fig. 14. The intensity $I_A$ of the peak A at 42.72° was higher than the intensity $I_B$ of the peak B. Further, a ratio of $I_A$, the intensity $I_C$ of the peak C based on an anatase structure, and the intensity $I_D$ of a peak based on a rutile structure $(I_A/ (I_A+I_C+I_D))$ was 0. 91, and a cubic crystal was confirmed as a main product.

3. Production of Fuel Cell Membrane Electrode Assembly and Evaluation of Power Generation Properties Thereof

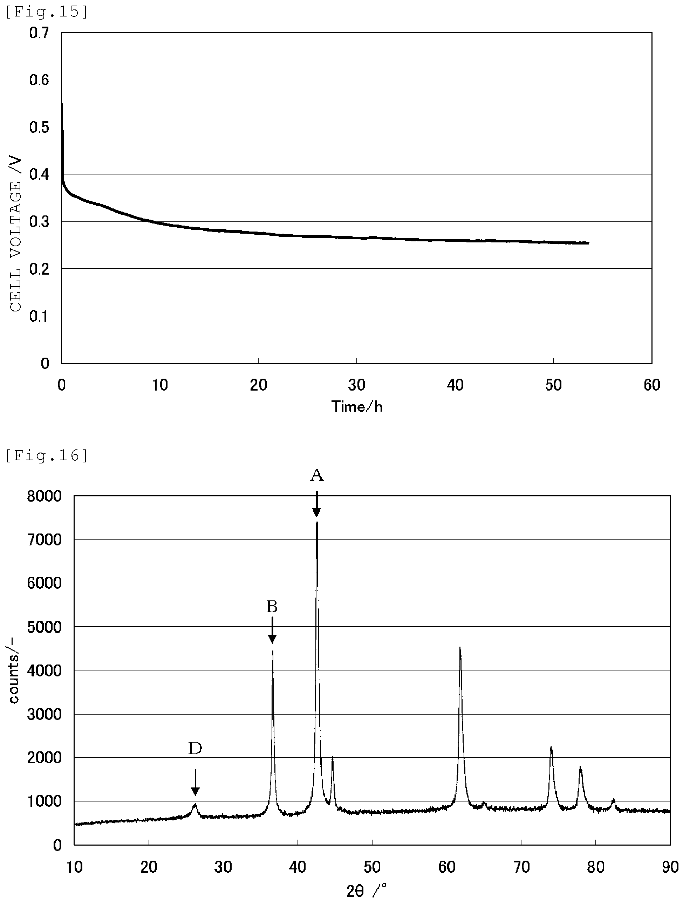

A single cell of a polymer electrolyte fuel cell (hereinafter also referred to as a "single cell (7) ") was prepared by the same method as that of Example 1 except that the catalyst (7) was used instead of the catalyst (1). The mass of the fuel cell catalyst (7) in the cathode catalyst layer (7) per unit area was 2.27 mg/cm$^2$.
Further, the power generation properties of the single cell (7) were evaluated under the same conditions as those of Example 1. The measurement results indicating the variation in cell voltage with time in the single cell (7) are shown in Fig. 15.
After measurement by the catalytic durability evaluation method, the average slope of the voltage drop in a period from 12th hour to the end of the measurement, which period was a portion after shifting to the stage c, was -0.72 mV/h, and the catalyst durability was confirmed to be high. After evaluation by the catalytic performance evaluation method, a cell voltage at the time of after 20 hours, which time was after shifting to the stage c, was 0.28 V, and the catalytic performance was confirmed to be high.

[Example 8]

1. Production of Catalyst

A catalyst (8) was produced by using titanium tetraisopropoxide, pyrazinecarboxylic acid, andiron(II) acetate as the titanium-containing compound (1a), the nitrogen-containing organic compound (2), and the second transition metal-containing compound (1b), respectively.
Specifically, in a beaker, 2.60 g (25.94 mmol) of acetylacetone was put; while stirring this, 5 mL (17.59 mmol) of titanium tetraisopropoxide was added; and 16 mL (280.00 mmol) of acetic acid was further added dropwise over 2 minutes to prepare a titanium solution.
In a beaker, 50 mL of water, 60 mL of ethanol, and 70 mL of acetic acid were put; and 8.74 g (70.36 mmol) of pyrazinecarboxylic acid was added thereto and completely dissolved. While the resultant solution was stirred, 290 mg (1.67 mmol) of iron (II) acetate was added thereto little by little and dissolved. Then, with the temperature kept at room temperature and stirring, the titanium solution was added dropwise over 10 minutes; and the dropwise addition was followed by stirring for 30 minutes to give a catalyst precursor solution.
The catalyst precursor solution was heated and stirred with a rotary evaporator in a nitrogen atmosphere under reduced pressure with the temperature of a hot stirrer set at about 100°C, and thereby the solvent was slowly evaporated. The solvent was completely evaporated and the resultant solid residue was crushed with an automatic mortar to give 11.3 g of a powder.
This powder was put in an infrared gold image furnace manufactured by ULVAC-RIKO Corporation, was subjected to atmosphere substitution by vacuum drawing twice with a mixed gas containing 4% by volume of a hydrogen gas and 96% by volume of a nitrogen gas, was heated to 1150°C at 20°C/min while flowing the mixed gas at a flow rate of 125 mL/min, was maintained at 1150°C for 15 minutes, and was naturally cooled after putting off a heater, to thereby give a powdery catalyst (hereinafter also expressed as "catalyst (8)"). The temperature was measured by a thermocouple manufactured by ULVAC-RIKO Corporation, with which the bottom end of a sample holder was equipped. The BET specific surface area and composition determined by the elemental analysis, of this catalyst, are listed in Table 1.

2. XRD Measurement of Catalyst

After measuring the powder X-ray diffraction spectrum of the catalyst (8), peaks A, B, and D were observed as shown in Fig. 16. The intensity $I_A$ of the peak A at 42.55° was higher than the intensity $I_B$ of the peak B. Further, a ratio of $I_A$, the intensity $I_C$ of a peak based on an anatase structure, and the intensity $I_D$ of the peak D based on a rutile structure $(I_A/ (I_A+I_C+I_D))$ was 0.98, and a cubic crystal was confirmed as a main product.

3. Production of Fuel Cell Membrane Electrode Assembly and Evaluation of Power Generation Properties Thereof

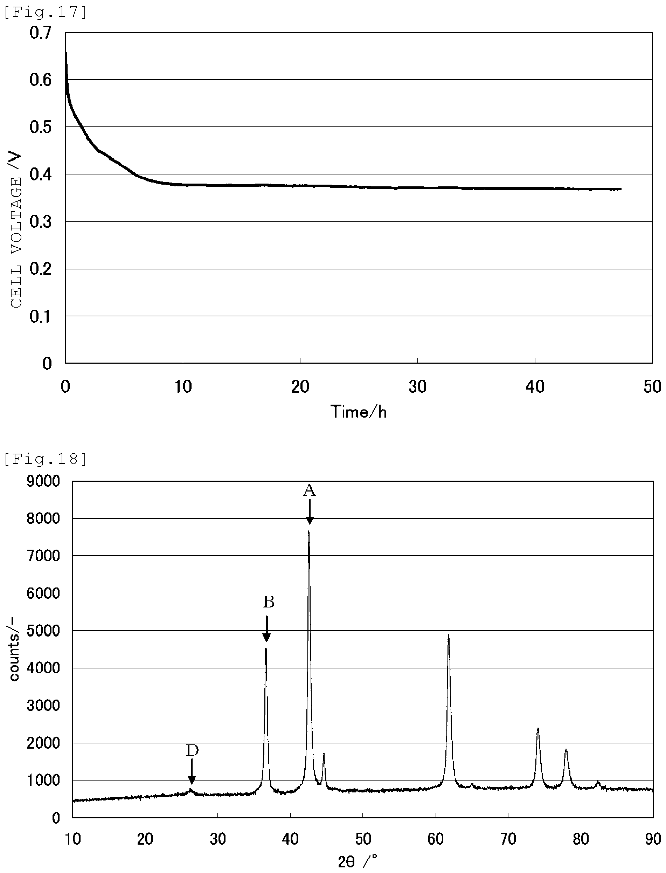

A single cell of a polymer electrolyte fuel cell (hereinafter also referred to as a "single cell (8) ") was prepared by the same method as that of Example 1 except that the catalyst (8) was used instead of the catalyst (1). The mass of the fuel cell catalyst (1) in the cathode catalyst layer (1) per unit area was 2.27 mg/cm$^2$.
Further, the power generation properties of the single cell (8) were evaluated under the same conditions as those of Example 1. The measurement results indicating the variation in cell voltage with time in the single cell (8) are shown in Fig. 17.
After measurement by the catalytic durability evaluation method, the average slope of the voltage drop in a period from 12th hour to the end of the measurement, which period was a portion after shifting to the stage c, was -0.29 mV/h, and the catalyst durability was confirmed to be high. After evaluation by the catalytic performance evaluation method, a cell voltage at the time of after 20 hours, which time was after shifting to the stage c, was 0.38 V, and the catalytic performance was confirmed to be high.

[Example 9]

1. Preparation of Catalyst

A catalyst (9) was synthesized by the same method as that of Example 8 except that 10 mL of a 5% NAFION (registered trademark) solution (DE521, DuPont) was added as the "compound (3) containing at least one element A selected from the group consisting of boron, phosphorus, and sulfur as well as fluorine" to prepare a catalyst precursor solution. Specifically, this Example 9 corresponds to an example in which the "compound (3)" containing sulfur and fluorine was used together.
The BET specific surface area and composition determined by the elemental analysis, of this catalyst, are listed in Table 1.

2. XRD Measurement of Catalyst

After measuring the powder X-ray diffraction spectrum of the catalyst (9), peaks A, B, and D were observed as shown in Fig. 18. The intensity $I_A$ of the peak A at 42.55° was higher than the intensity $I_B$ of the peak B. Further, a ratio of $I_A$, the intensity $I_C$ of a peak based on an anatase structure, and the intensity $I_D$ of the peak D based on a rutile structure $(I_A/ (I_A+I_C+I_D))$ was 0.98, and a cubic crystal was confirmed as a main product.

3. Production of Fuel Cell Membrane Electrode Assembly and Evaluation of Power Generation Properties Thereof

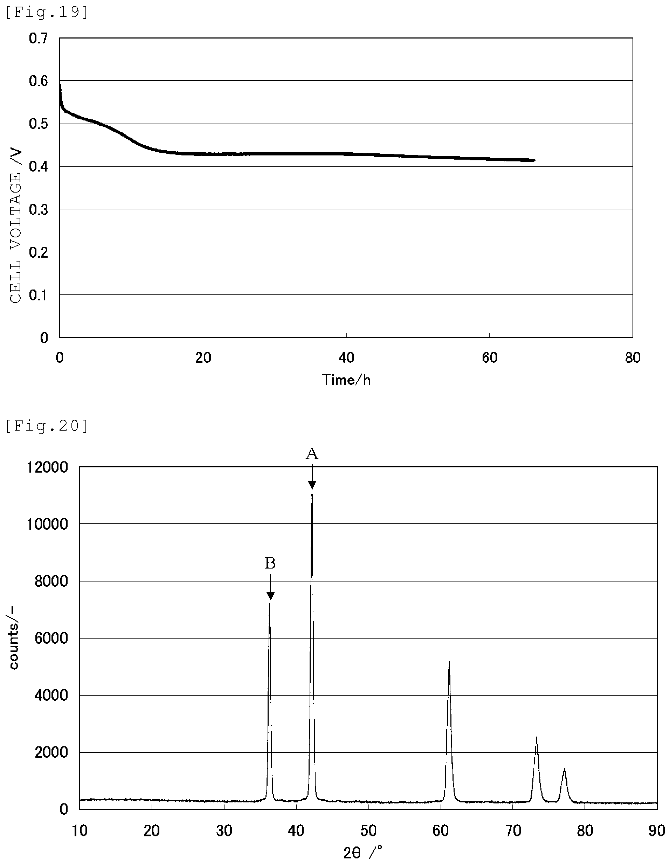

A single cell of a polymer electrolyte fuel cell (hereinafter also referred to as a "single cell (9) ") was prepared by the same method as that of Example 1 except that the catalyst (9) was used instead of the catalyst (1). The mass of the fuel cell catalyst (9) in the cathode catalyst layer (9) per unit area was 2.27 mg/cm$^2$.
Further, the power generation properties of the single cell (9) were evaluated under the same conditions as those of Example 1. The measurement results indicating the variation in cell voltage with time in the single cell (9) are shown in Fig. 19.
After measurement by the catalytic durability evaluation method, the average slope of the voltage drop in a period from 18th hour to the end of the measurement, which period was a portion after shifting to the stage c, was -0.33 mV/h, and the catalyst durability was confirmed to be high. After evaluation by the catalytic performance evaluation method, a cell voltage at the time of after 20 hours, which time was after shifting to the stage c, was 0.43 V, and the catalytic performance was confirmed to be high.

[Comparative Example 1]

1. XRD Measurement of Catalyst

After measuring the powder X-ray diffraction spectrum of titanium carbonitride ($TiC_{0.5}N_{0.5}$) manufactured by A.L.M.T. Corp., peaks A and B were observed as shown in Fig. 20. The intensity $I_A$ of the peak A at 42.19° was higher than the intensity $I_B$ of the peak B. Further, a ratio of $I_A$, the intensity $I_C$ of a peak based on an anatase structure, and the intensity $I_D$ of a peak based on a rutile structure ($I_A/(I_A+I_C+I_D)$) was 1, and a cubic crystal was confirmed as a main product.

In Comparative Example 1, this titanium carbonitride was used as a "catalyst (10)" as described below.

2. Production of Fuel Cell Membrane Electrode Assembly and Evaluation of Power Generation Properties Thereof

A single cell of a polymer electrolyte fuel cell (hereinafter also referred to as a "single cell (10) ") was prepared by the same method as that of Example 1 except that the catalyst (10) was used instead of the catalyst (1). The mass of the fuel cell catalyst (10) in the cathode catalyst layer (10) per unit area was 2.13 mg/cm$^2$.

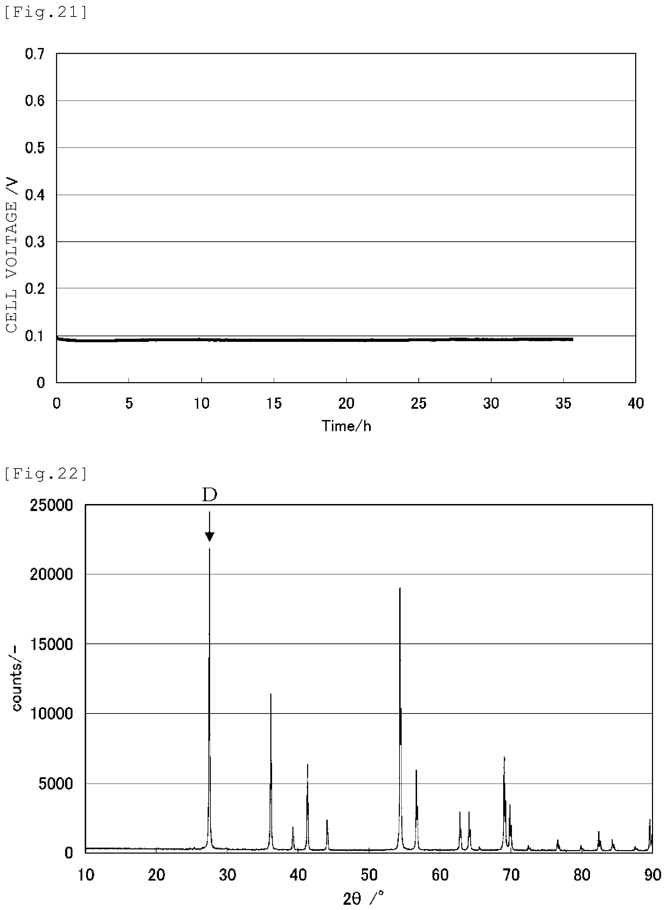

Further, the power generation properties of the single cell (10) were evaluated under the same conditions as those of Example 1. The measurement results indicating the variation in cell voltage with time in the single cell (10) are shown in Fig. 21.

After measurement by the catalytic durability evaluation method, the average slope of the voltage drop in a period from 9th hour to the end of the measurement, which period was a portion after shifting to the stage c, was +0.07 mV/h, and the catalyst durability was confirmed to be high. However, after evaluation by the catalytic performance evaluation method, a cell voltage at the time of after 20 hours, which time was after shifting to the stage c, was 0.09 V, and the catalytic performance was low.

[Comparative Example 2]

1. XRD Measurement of Catalyst

After measuring the powder X-ray diffraction spectrum of rutile titanium dioxide ($TiO_2$) manufactured by Soekawa Chemical Co., Ltd., a peak D was observed as shown in Fig. 22. A peak A at 42° to 43° was not observed, and no cubic crystal was confirmed to be formed. In addition, because of $I_A = 0$, a peak intensity ratio ($I_A/(I_A+I_C+I_D)$) was 0.

In Comparative Example 2, this rutile titanium dioxide was used as a "catalyst (11)" as described below.

2. Production of Fuel Cell Membrane Electrode Assembly and Evaluation of Power Generation Properties Thereof

A single cell of a polymer electrolyte fuel cell (hereinafter also referred to as a "single cell (11) ") was prepared by the same method as that of Example 1 except that the catalyst (11) was used instead of the catalyst (1).

Further, the power generation properties of the single cell (11) were evaluated under the same conditions as those of Example 1. Electricity was not able to be generated in the single cell (11), and there was no catalytic performance.

[Comparative Example 3]

1. XRD Measurement of Catalyst

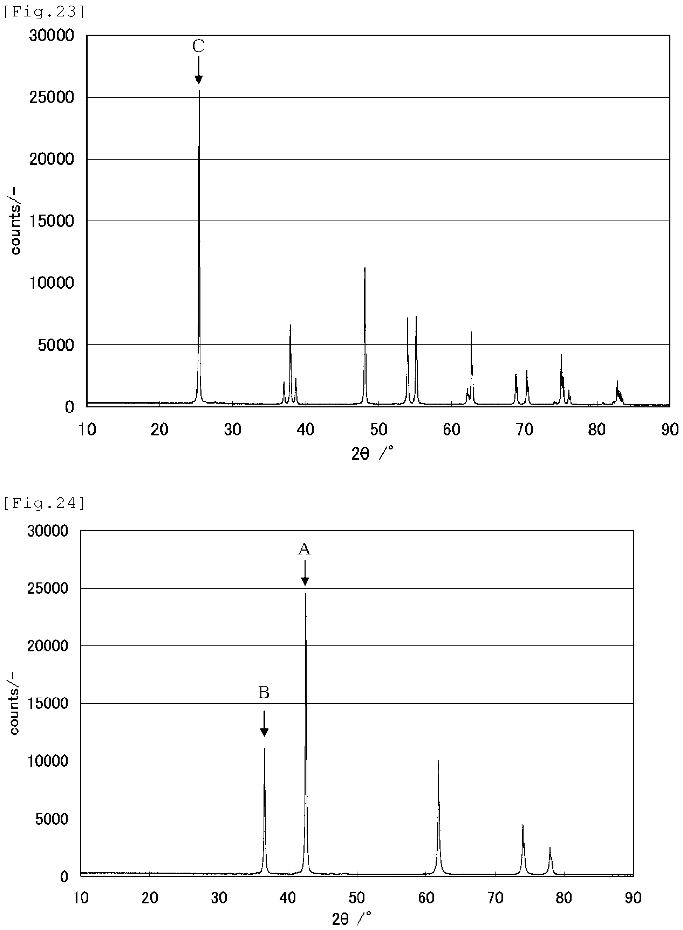

After measuring the powder X-ray diffraction spectrum of anatase titanium dioxide ($TiO_2$) manufactured by Soekawa Chemical Co., Ltd., a peak C was observed as shown in Fig. 23. A peak A at 42° to 43° was not observed, and no cubic crystal was confirmed to be formed. In addition, because of $I_A = 0$, a peak intensity ratio ($I_A/(I_A+I_C+I_D)$) was 0.

In Comparative Example 3, this anatase titanium dioxide was used as a "catalyst (12)" as described below.

2. Production of Fuel Cell Membrane Electrode Assembly and Evaluation of Power Generation Properties Thereof

A single cell of a polymer electrolyte fuel cell (hereinafter also referred to as a "single cell (12) ") was prepared by the same method as that of Example 1 except that the catalyst (12) was used instead of the catalyst (1). The mass of the fuel cell catalyst (12) in the cathode catalyst layer (12) per unit area was 2.10 mg/cm$^2$.

Further, the power generation properties of the single cell (12) were evaluated under the same conditions as those of Example 1. Electricity was not able to be generated in the single cell (12), and there was no catalytic performance.

[Comparative Example 4]

1. XRD Measurement of Catalyst

After measuring the powder X-ray diffraction spectrum of titanium nitride (TiN) manufactured by Soekawa Chemical Co., Ltd. , peaks A and B were observed as shown in Fig. 24. The intensity $I_A$ of the peak A at 42.59° was higher than the intensity $I_B$ of the peak B. Further, a ratio of $I_A$, the intensity $I_C$ of a peak based on an anatase structure, and the intensity $I_D$ of a peak based on a rutile structure ($I_A/ (I_A+I_C+I_D)$) was 1, and a cubic crystal was confirmed to be formed.

In Comparative Example 4, this titanium nitride was used as a "catalyst (13)" as described below.

2. Production of Fuel Cell Membrane Electrode Assembly and Evaluation of Power Generation Properties Thereof

A single cell of a polymer electrolyte fuel cell (hereinafter also referred to as a "single cell (13) ") was prepared by the same method as that of Example 1 except that the catalyst (13) was used instead of the catalyst (1). The mass of the fuel cell catalyst (13) in the cathode catalyst layer (13) per unit area was 2.21 mg/cm$^2$.

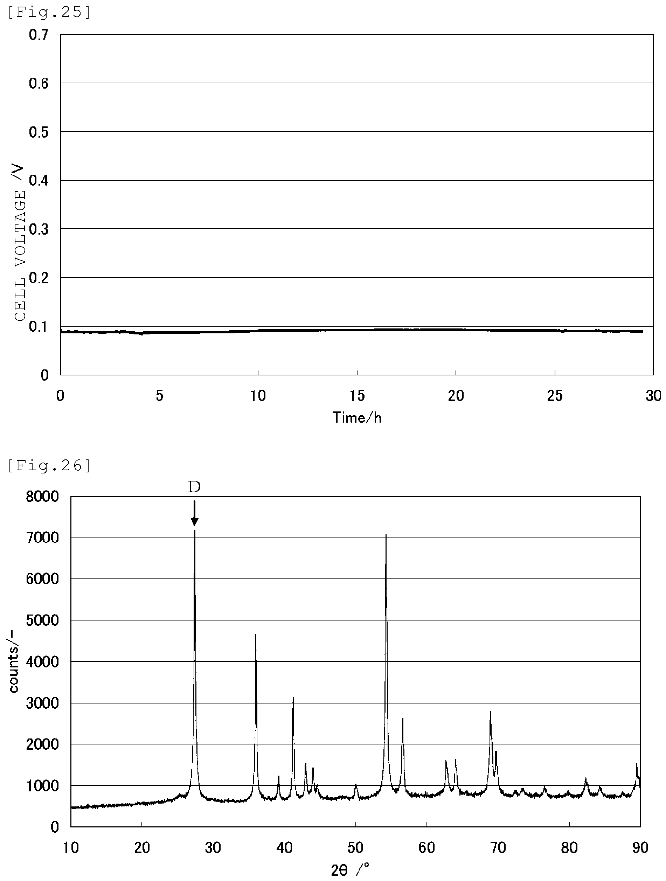

Further, the power generation properties of the single cell (13) were evaluated under the same conditions as those of Example 1. The measurement results indicating the variation in cell voltage with time in the single cell (13) are shown in Fig. 25.

After measurement by the catalytic durability evaluation method, the average slope of the voltage drop in a period from 1st hour to the end of the measurement, which period was a portion after shifting to the stage c, was +0.1 mV/h, and the catalyst durability was confirmed to be high. However, after evaluation by the catalytic performance evaluation method, a cell voltage at the time of after 20 hours, which time was after shifting to the stage c, was 0.1 V, and the catalytic performance was low.

[Comparative Example 5]

1. Preparation of Catalyst

A catalyst (14) was synthesized by the same method as that of Example 1 except that burning temperature was 800°C. The BET specific surface area and composition determined by the elemental analysis, of this catalyst, are listed in Table 1.

2. XRD Measurement of Catalyst

After measuring the powder X-ray diffraction spectrum of the catalyst (14), a peak D was observed as shown in Fig. 26. No peak at 42° to 43° was observed, and no cubic crystal was confirmed to be formed. In addition, because of $I_A = 0$, a peak intensity ratio ($I_A/ (I_A+I_C+I_D)$) was 0.

3. Production of Fuel Cell Membrane Electrode Assembly and Evaluation of Power Generation Properties Thereof

A single cell of a polymer electrolyte fuel cell (hereinafter also referred to as a "single cell (14) ") was prepared by the same method as that of Example 1 except that the catalyst (14) was used instead of the catalyst (1). The mass of the fuel cell catalyst (14) in the cathode catalyst layer (14) per unit area was 1.95 mg/cm$^2$.

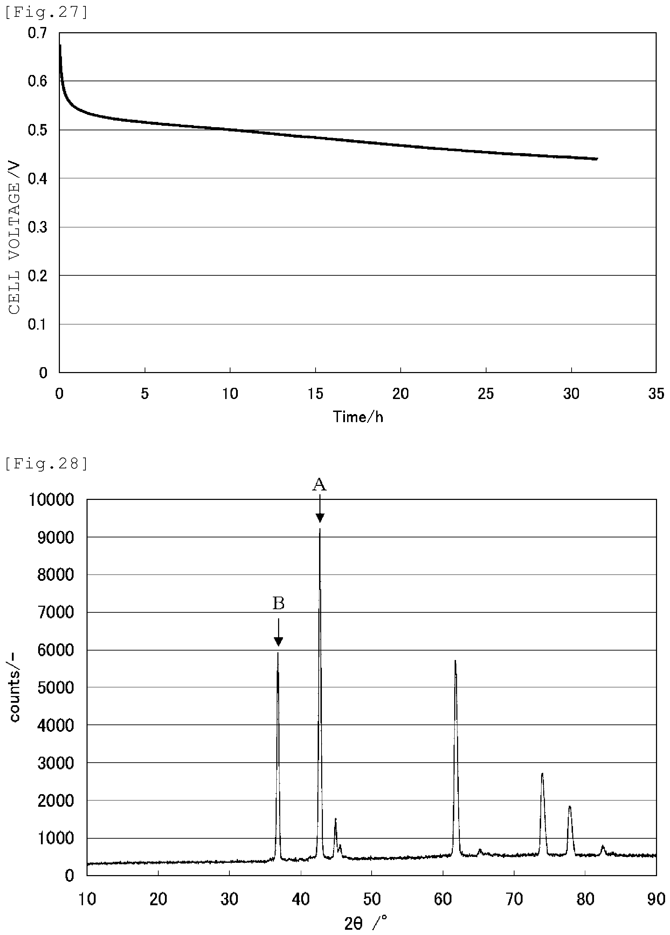

The measurement results are shown in Fig. 27. The cell voltage indicates the higher catalytic performance in MEA, while a voltage maintenance level with time indicates the higher durability in MEA.

After measurement by the catalytic durability evaluation method, the average slope of the voltage drop in a period from 12th hour to the end of the measurement, which period was a portion after shifting to the stage c, was -3.1 mV/h, and the catalyst durability was low.

On the other hand, after evaluation by the catalytic performance evaluation method, a cell voltage at the time of after 20 hours, which time was after shifting to the stage c, was 0.48 V, and the catalytic performance was high.

[Comparative Example 6]

1. Preparation of Catalyst

A catalyst (15) was synthesized by the same method as that of Example 6 except that burning temperature was 1600°C. The BET specific surface area and composition determined by the elemental analysis, of this catalyst, are listed in Table 1.

2. XRD Measurement of Catalyst

After measuring the powder X-ray diffraction spectrum of the catalyst (15), peaks A and B were observed as shown in Fig. 28. The intensity $I_A$ of the peak A at 42.72° was higher than the intensity $I_B$ of the peak B. Further, a ratio of $I_A$, the intensity $I_C$ of a peak based on an anatase structure, and the intensity $I_D$ of a peak based on a rutile structure ($I_A/(I_A+I_C+I_D)$) was 1, and a cubic crystal was confirmed as a main product.

3. Production of Fuel Cell Membrane Electrode Assembly and Evaluation of Power Generation Properties Thereof

A single cell of a polymer electrolyte fuel cell (hereinafter also referred to as a "single cell (15) ") was prepared by the same method as that of Example 1 except that the catalyst (15) was used instead of the catalyst (1). The mass of the fuel cell catalyst (15) in the cathode catalyst layer (15) per unit area was 1.92 mg/cm$^2$.

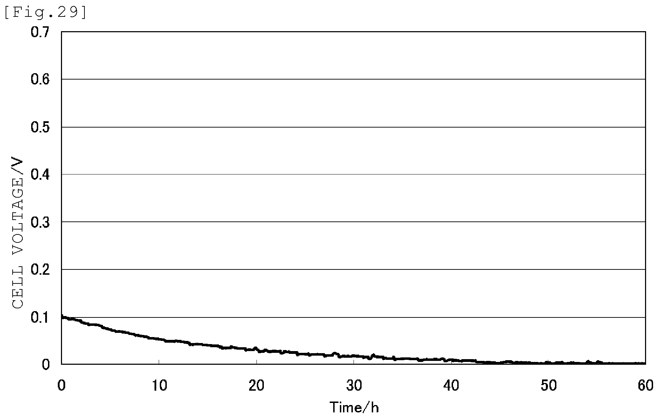

Further, the power generation properties of the single cell (15) were evaluated under the same conditions as those of Example 1. The measurement results indicating the variation in cell voltage with time in the single cell (15) are shown in Fig. 29. The higher cell voltage indicates the higher catalytic performance in MEA, while a higher voltage maintenance level with time indicates the higher durability in MEA.

After measurement by the catalytic durability evaluation method, the average slope of the voltage drop in a period from 10 hours to the end of the measurement, which period was a portion after shifting to the stage c, was -3.4 mV/h, and the catalyst durability was low. After evaluation by the catalytic performance evaluation method, a cell voltage at the time of after 20 hours, which time was after shifting to the stage c, was 0.03 V, and the catalytic performance was low.

[Table 1]

(Table 1: (1))

| | M1 | M2 | Nitrogen-containing organic compound | Constituent element of compound (3) | Heat treatment condition | Burning atmosphere | Holding time |
|---|---|---|---|---|---|---|---|
| Example 1 | Ti | Fe | Gly | - | 950°C | $H_2/N_2$ | 15 min |
| Example 2 | Ti | Fe | Gly | - | 1050°C | $H_2/N_2$ | 15 min |
| Example 3 | Ti | Fe | Gly | - | 1100°C | $H_2/N_2$ | 15 min |
| Example 4 | Ti | Fe | Gly | - | 1150°C | $H_2/N_2$ | 15 min |
| Example 5 | Ti | Fe | Gly | - | 1200°C | $H_2/N_2$ | 15 min |
| Example 6 | Ti | Fe | Gly | - | 1400°C | $H_2/N_2$ | 2 h |
| Example 7* | Ti | - | Gly | - | 1150°C | $H_2/N_2$ | 15 min |
| Example 8 | Ti | Fe | PYR | - | 1150°C | $H_2/N_2$ | 15 min |
| Example 9 | Ti | Fe | PYR | S, F | 1150°C | $H_2/N_2$ | 15 min |
| Comparative Example 1 | Ti | - | - | - | - | - | - |
| Comparative Example 2 | Ti | - | - | - | - | - | - |
| Comparative Example 3 | Ti | - | - | - | - | - | - |
| Comparative Example 4 | Ti | - | - | - | - | - | - |
| Comparative Example 5 | Ti | Fe | Gly | - | 800°C | $H_2/N_2$ | 15 min |

(continued)

|  | M1 | M2 | Nitrogen-containing organic compound | Constituent element of compound (3) | Heat treatment condition | Burning atmosphere | Holding time |
|---|---|---|---|---|---|---|---|
| Comparative Example 6 | Ti | Fe | Gly | - | 1600°C | $H_2/N_2$ | 2 h |

*Reference only
* For "Nitrogen-containing organic compound", "Gly" and "PYR" represent glycine and pyrazinecarboxylic acid, respectively.
* For "Constituent element of compound (3)", "-" is described in examples in which the compound (3) was not used, while among boron, phosphorus, sulfur, and fluorine, an element contained in the compound (3) is shown in examples in the compound (3) was added.

[Table 2]

(Table 1: (2))

|  | BET surface area $(m^2g^{-1})$ | Catalyst composition | Peak intensity ratio $I_A/(I_A+I_C+I_D)$ | Cell voltage (V) | Slope of voltage $(mVh^{-1})$ |
|---|---|---|---|---|---|
| Example 1 | 268 | $TiFe_{0.088}C_{2.05}N_{0.15}O_{1.13}$ | 0.40 | 0.53 | -1.8 |
| Example 2 | 291 | $TiFe_{0.085}C_{1.42}N_{0.18}O_{0.84}$ | 0.77 | 0.40 | -0.48 |
| Example 3 | 218 | $TiFe_{0.089}C_{1.41}N_{0.42}O_{0.67}$ | 0.96 | 0.38 | -0.48 |
| Example 4 | 291 | $TiFe_{0.088}C_{1.13}N_{0.41}O_{0.58}$ | 0.91 | 0.32 | +0.02 |
| Example 5 | 239 | $TiFe_{0.087}C_{0.80}N_{0.46}O_{0.47}$ | 0.80 | 0.22 | +0.01 |
| Example 6 | 122 | $TiFe_{0.088}C_{2.45}N_{0.81}O_{0.06}$ | 0.99 | 0.18 | -0.2 |
| Example 7 * | 126 | $TiC_{1.30}N_{0.17}O_{0.98}$ | 0.91 | 0.28 | -0.72 |
| Example 8 | 218 | $TiFe_{0.089}C_{1.77}N_{0.63}O_{0.35}$ | 0.98 | 0.38 | -0.29 |
| Example 9 | 202 | $TiFe_{0.089}C_{2.18}N_{0.56}O_{0.31}$ | 0.98 | 0.43 | -0.33 |
| Comparative Example 1 | 1.1 | $TiC_{0.5}N_{0.5}$ | 1 | 0.09 | +0.07 |
| Comparative Example 2 | 7.4 | $TiO_2$ | 0 | 0 | 0 |
| Comparative Example 3 | 10.7 | $TiO_2$ | 0 | 0 | 0 |
| Comparative Example 4 | 2 | $TiN$ | 1 | 0.1 | +0.1 |
| Comparative Example 5 | 244 | $TiFe_{0.089}C_{1.99}N_{0.05}O_{1.31}$ | 0 | 0.48 | -3.1 |
| Comparative Example 6 | 122 | $TiFe_{0.087}C_{0.24}N_{0.90}O_{0.04}$ | 1 | 0.03 | -3.4 |

* Reference only

Reference Signs List

11    Membrane electrode assembly (MEA)

12    Gasket
13    Separator
14    Current collector
15    Rubber heater

**Claims**

1.  An oxygen reduction catalyst comprising titanium, carbon, nitrogen, and oxygen as constituent elements, and at least one transition metal element M2 selected from iron, nickel, chromium, cobalt, vanadium, and manganese, wherein
    $0.1 < x \leq 7$, $0.01 < y \leq 2$, and $0.05 < z \leq 0.6$ are met when a ratio of the number of atoms of each of the constituent elements (titanium: carbon: nitrogen: oxygen) is represented by 1: x: y: z;
    in XRD measurement using a Cu-K$\alpha$ ray, peaks are each present in at least regions A and B among regions A to D which occupy $2\theta$ ranges described below:

    A: 42° to 43°,
    B: 36.5° to 37°,
    C: 25° to 26°, and
    D: 27° to 28°; and

    each of maximum peak intensities $I_A$, $I_B$, $I_C$, and $I_D$ in the regions A to D satisfies both relationships described in expressions (1) and (2) described below:

    $$I_A > I_B \qquad\qquad (1),$$

    and

    $$0.3 \leq (I_A / (I_A + I_C + I_D)) \leq 1 \, (2).$$

2.  A method for producing the oxygen reduction catalyst according to claim 1, the method comprising steps 1 to 3 described below:

    step 1: the step of mixing at least a titanium-containing compound (1a), a nitrogen-containing organic compound (2), and a solvent to give a catalyst precursor solution;
    step 2: the step of removing the solvent from the catalyst precursor solution to give a solid residue; and
    step 3: the step of heat-treating the solid residue, obtained in the step 2, at a temperature of 900°C to 1400°C to give the oxygen reduction catalyst,

    wherein any of the components to be mixed comprises an oxygen atom, and
    wherein in the step 1, a compound (1b) containing at least one transition metal element M2 selected from iron, nickel, chromium, cobalt, vanadium, and manganese is further added.

3.  The method according to claim 2, wherein in the step 1, a compound (3) containing at least one element selected from the group consisting of boron, phosphorus, and sulfur as well as fluorine is further added.

4.  The method according to claim 3, wherein the compound (3) is at least one selected from the group consisting of boric acid derivatives containing fluorine, sulfonic acid derivatives containing fluorine, and phosphoric acid derivatives containing fluorine.

5.  The method according to any one of claims 2 to 4,
    wherein the solvent comprises alcohol or water.

6.  The method according to any one of claims 2 to 5,
    wherein the titanium-containing compound (1a) is one or more selected from the group consisting of titanium complexes as well as phosphates, sulfates, nitrates, organic acid salts, oxyhalides, alkoxides, halides, perhalates, and hypohalites of titanium.

7. The method according to any one of claims 2 to 6, wherein the nitrogen-containing organic compound (2) has, in its molecule, one or more selected from amino group, nitrile group, imido group, imine group, nitro group, amide group, azido group, aziridine group, azo group, isocyanate group, isothiocyanate group, oxime group, diazo group, nitroso group, pyrrole ring, porphyrin ring, imidazole ring, pyridine ring, pyrimidine ring, and pyrazine ring.

8. The method according to any one of claims 2 to 7, wherein the nitrogen-containing organic compound (2) has, in its molecule, one or more selected from hydroxyl group, carboxyl group, formyl group, halocarbonyl group, sulfonate group, phosphate group, ketone group, ether group, and ester group.

9. The method according to any one of claims 2 to 8, wherein in the step 3, the solid residue is heat-treated in a non-oxidizing atmosphere.

10. The method according to claim 9, wherein the non-oxidizing atmosphere is an atmosphere containing nitrogen.

11. The method according to claim 9, wherein the non-oxidizing atmosphere is an atmosphere containing 1% by volume or more and 20% by volume or less of a hydrogen gas.

12. A fuel cell electrode catalyst comprising the oxygen reduction catalyst according to claim 1.

13. An ink comprising the oxygen reduction catalyst according to claim 1.

14. A fuel cell catalyst layer produced using the ink according to claim 13.

15. An electrode comprising the fuel cell catalyst layer according to claim 14 and a gas diffusion layer.

16. A membrane electrode assembly comprising: an anode; a cathode comprising the fuel cell catalyst layer according to claim 14; and an electrolyte membrane between the anode and the cathode.

17. A polymer electrolyte fuel cell comprising the membrane electrode assembly according to claim 16.

**Patentansprüche**

1. Sauerstoffreduktionskatalysator, der Titan, Kohlenstoff, Stickstoff und Sauerstoff als Konstitutionselemente und mindestens ein unter Eisen, Nickel, Chrom, Kobalt, Vanadium und Mangan ausgewähltes Übergangsmetallelement M2 enthält, wobei
0,1<x≤7, 0,01<y≤2 und 0,05<z≤0,6 erfüllt sind, wenn das Verhältnis der Atomzahlen jedes der Konstitutionselemente (Titan: Kohlenstoff: Stickstoff: Sauerstoff) durch 1: x: y: z ausgedrückt wird;
in der XRD-Messung unter Einsatz von Kupfer-Kα-Strahlen Peaks jeweils mindestens in den Bereichen A und B der nachstehend beschriebenen 2θ-Bereiche A bis D vorhanden sind:

A: 42° bis 43°,
B: 36,5° bis 37°,
C: 25° bis 26°, und
D: 27° bis 28°; und

jede der Maximumspeakintensitäten $I_A$, $I_B$, $I_C$, und $I_D$ in den Bereichen A bis D die folgenden beiden Beziehungen (1) und (2) erfüllen:

$$I_A > I_B \qquad (1),$$

und

$$0,3 \leq (I_A / (I_A + I_C + I_D)) \leq 1 \quad (2).$$

2. Verfahren zum Herstellen eines Sauerstoffreduktionskatalysators nach Anspruch 1, wobei das Verfahren die folgenden Stufen 1 bis 3 umfasst:

Stufe 1: die Stufe, in der mindestens eine Titan enthaltende Verbindung (1a), eine Stickstoff enthaltende organische Verbindung (2) und ein Lösungsmittel unter Bildung einer Katalysatorvorläuferlösung gemischt werden; Stufe 2: die Stufe, in der das Lösungsmittel von der Katalysatorvorläuferlösung unter Bildung eines festen Restes entfernt wird; und Stufe 3: die Stufe, in der der in Stufe 2 erhaltene feste Rest bei einer Temperatur von 900 bis 1400°C unter Bildung des Sauerstoffreduktionskatalysators hitzebehandelt wird, wobei jede der zu mischenden Komponenten ein Sauerstoffatom enthält, und

wobei in der Stufe 1 eine Verbindung (1b), die mindestens ein unter Eisen, Nickel, Chrom, Kobalt, Vanadium und Mangan ausgewähltes Übergangsmetallelement M2 enthält, zusätzlich zugegeben wird.

3. Verfahren nach Anspruch 2, wobei in der Stufe 1 eine Verbindung (3), die mindestens ein aus der aus Bor, Phosphor und Schwefel sowie Fluor bestehenden Gruppe ausgewähltes Element enthält, zusätzlich zugegeben wird.

4. Verfahren nach Anspruch 3, wobei die Verbindung (3) mindestens eine Verbindung ist, die aus der Gruppe ausgewählt ist, die aus Fluor enthaltenden Borsäurederivaten, Fluor enthaltenden Sulfonsäurederivaten und Fluor enthaltenden Phosphorsäurederivaten besteht.

5. Verfahren nach einem der Ansprüche 2 bis 4, wobei das Lösungsmittel Alkohol oder Wasser ist.

6. Verfahren nach einem der Ansprüche 2 bis 5, wobei die Titan enthaltende Verbindung (1a) mindestens eine Verbindung ist, die aus der Gruppe ausgewählt ist, die aus Titankomplexen sowie Phosphaten, Sulfaten, Nitraten, Säuren organischer Salze, Oxyhalogeniden, Alkoxiden, Halogeniden, Perhalaten und Hypohaliten von Titan besteht.

7. Verfahren nach einem der Ansprüche 2 bis 6, wobei die Stickstoff enthaltende organische Verbindung (2) in ihrem Molekül mindestens eine Gruppe aufweist, die unter einer Amingruppe, Nitrilgruppe, Imidgruppe, Imingruppe, Nitrogruppe, Amidgruppe, Azidgruppe, Aziridingruppe, Azogruppe, Isocyanatgruppe, Isothiocyanatgruppe, Oximgruppe, Diazogruppe, Nitrosogruppe, einem Pyrrolring, Porphyrinring, Imidazolring, Pyridinring, Pyrimidinring und Pyrazinring ausgewählt ist.

8. Verfahren nach einem der Ansprüche 2 bis 7, wobei die Stickstoff enthaltende organische Verbindung (2) in ihrem Molekül mindestens eine Gruppe aufweist, die unter einer Hydroxygruppe, Carboxygruppe, Formylgruppe, Halocarbonylgruppe, Sulfonatgruppe, Phosphatgruppe, Ketongruppe, Ethergruppe und Estergruppe ausgewählt ist.

9. Verfahren nach einem der Ansprüche 2 bis 8, wobei in der Stufe 3 der feste Rest in einer nicht-oxidierenden Atmosphäre hitzebehandelt wird.

10. Verfahren nach Anspruch 9, wobei die nicht-oxidierende Atmosphäre eine Stickstoff enthaltende Atmosphäre ist.

11. Verfahren nach Anspruch 9, wobei die nicht-oxidierende Atmosphäre 1 Volumen-% oder mehr und 20 Volumen-% oder weniger eines Wasserstoffgases enthält.

12. Brennstoffzellenelektrodenkatalysator, der den Sauerstoffreduktionskatalysator nach Anspruch 1 enthält.

13. Tinte, die den Sauerstoffreduktionskatalysator nach Anspruch 1 enthält.

14. Brennstoffzellenkatalysatorschicht, hergestellt unter Verwendung der Tinte nach Anspruch 13.

15. Elektrode, die die Brennstoffzellenkatalysatorschicht nach Anspruch 14 und eine Gasdiffusionsschicht umfasst.

**16.** Membranelektrodenaufbau, welcher umfasst: eine Anode; eine die Brennstoffzellenkatalysatorschicht nach Anspruch 14 umfassende Kathode; und eine Elektrodenmembran zwischen der Anode und der Kathode.

**17.** Polymerelektrolytbrennstoffzelle, die den Membranelektrodenaufbau nach Anspruch 16 umfasst.

**Revendications**

**1.** Catalyseur de réduction de l'oxygène comprenant du titane, du carbone, de l'azote, et de l'oxygène comme éléments constitutifs, et au moins un élément de métal de transition M2 sélectionné parmi le fer, le nickel, le chrome, le cobalt, le vanadium, et le manganèse, dans lequel

$0,1 < x \leq 7$, $0,01 < y \leq 2$, et $0,05 < z \leq 0,6$ sont satisfaites lorsqu'un rapport du nombre d'atomes de chacun des éléments constitutifs (titane:carbone:azote:oxygène) est représenté par $1:x:y:z$;
dans une analyse par diffraction de rayons X utilisant une raie Cu-K$\alpha$, des pics sont chacun présents dans au moins des régions A et B parmi des régions A à D qui occupent des intervalles de $2\theta$ décrits ci-dessous:

A: 42° à 43°,
B: 36,5° à 37°,
C: 25° à 26°, et
D: 27° à 28°; et

chacune des intensités de pic maximales $I_A$, $I_B$, $I_C$, et $I_D$ dans les régions A à D satisfait les deux relations décrites dans les expressions (1) et (2) décrites ci-dessous:

$$I_A > I_B \qquad\qquad (1),$$

et

$$0,3 \leq (I_A/(I_A+I_C+I_D)) \leq 1 \quad (2).$$

**2.** Procédé de production du catalyseur de réduction de l'oxygène selon la revendication 1, le procédé comprenant les étapes 1 à 3 décrites ci-dessous:

étape 1: l'étape de mélange d'au moins un composé contenant du titane (1a), d'un composé organique contenant de l'azote (2), et d'un solvant pour donner une solution de précurseur de catalyseur;
étape 2: l'étape d'élimination du solvant de la solution de précurseur de catalyseur pour obtenir un résidu solide; et
étape 3: l'étape de traitement thermique du résidu solide, obtenu à l'étape 2, à une température de 900°C à 1400°C pour donner le catalyseur de réduction de l'oxygène,

dans lequel un quelconque des composants à mélanger comprend un atome d'oxygène, et
dans lequel à l'étape 1, un composé (1b) contenant au moins un élément de métal de transition M2 sélectionné parmi le fer, le nickel, le chrome, le cobalt, le vanadium, et le manganèse est ajouté en plus.

**3.** Procédé selon la revendication 2, dans lequel à l'étape 1, un composé (3) contenant au moins un élément sélectionné dans le groupe composé du bore, du phosphore et du soufre ainsi que du fluor est ajouté en plus.

**4.** Procédé selon la revendication 3, dans lequel le composé (3) est au moins un composé sélectionné dans le groupe composé de dérivés de l'acide borique contenant du fluor, de dérivés de l'acide sulfonique contenant du fluor, et de dérivés de l'acide phosphorique contenant du fluor.

**5.** Procédé selon l'une quelconque des revendications 2 à 4, dans lequel le solvant comprend un alcool ou de l'eau.

**6.** Procédé selon l'une quelconque des revendications 2 à 5, dans lequel le composé contenant du titane (1a) est un ou plusieurs composé(s) sélectionné(s) dans le groupe composé de complexes du titane ainsi que de phosphates, sulfates, nitrates, sels d'acide organique, oxyhalogénures, alcoxydes, halogénures, perhalates, et hypohalites de titane.

**7.** Procédé selon l'une quelconque des revendications 2 à 6, dans lequel le composé organique contenant de l'azote (2) contient, dans sa molécule, un ou plusieurs groupe(s) sélectionné(s) parmi un groupe amino, un groupe nitrile, un groupe imido, un groupe imine, un groupe nitro, un groupe amide, un groupe azido, un groupe aziridine, un groupe azo, un groupe isocyanate, un groupe isothiocyanate, un groupe oxime, un groupe diazo, un groupe nitroso, un anneau pyrrole, un anneau porphyrine, un anneau imidazole, un anneau pyridine, un anneau pyrimidine, et un anneau pyrazine.

**8.** Procédé selon l'une quelconque des revendications 2 à 7, dans lequel le composé organique contenant de l'azote (2) contient, dans sa molécule, un ou plusieurs groupe(s) sélectionné(s) parmi un groupe hydroxyle, un groupe carboxyle, un groupe formyle, un groupe halocarbonyle, un groupe sulfonate, un groupe phosphate, un groupe cétone, un groupe éther, et un groupe ester.

**9.** Procédé selon l'une quelconque des revendications 2 à 8, dans lequel à l'étape 3, le résidu solide est traité thermiquement dans une atmosphère non oxydante.

**10.** Procédé selon la revendication 9, dans lequel l'atmosphère non oxydante est une atmosphère contenant de l'azote.

**11.** Procédé selon la revendication 9, dans lequel l'atmosphère non oxydante est une atmosphère contenant 1 % en volume ou plus et 20 % en volume ou moins d'un gaz hydrogène.

**12.** Catalyseur d'électrode pour pile à combustible comprenant le catalyseur de réduction de l'oxygène selon la revendication 1.

**13.** Encre contenant le catalyseur de réduction de l'oxygène selon la revendication 1.

**14.** Couche de catalyseur pour pile à combustible produite en utilisant l'encre selon la revendication 13.

**15.** Electrode comprenant la couche de catalyseur pour pile à combustible selon la revendication 14 et une couche de diffusion de gaz.

**16.** Ensemble d'électrodes à membrane comprenant: une anode; une cathode comprenant la couche de catalyseur pour pile à combustible selon la revendication 14; et une membrane d'électrolyte entre l'anode et la cathode.

**17.** Pile à combustible à électrolyte polymère comprenant l'ensemble d'électrodes à membrane selon la revendication 16.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

[Fig.12]

[Fig.13]

[Fig.14]

[Fig.15]

[Fig.16]

[Fig.17]

[Fig.18]

[Fig.19]

[Fig.20]

[Fig.21]

[Fig.22]

[Fig.23]

[Fig.24]

[Fig.25]

[Fig.26]

[Fig.27]

[Fig.28]

[Fig.29]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2251081 A1
- EP 2187469 A1
- JP 2007257888 A
- WO 2009107518 A
- JP 2009255053 A